# EUROPEAN PATENT APPLICATION

(11) **EP 4 835 033 A1**
(43) Date of publication of application: **04.11.2026**
(21) Application number: 24912704.4
(22) Date of filing: 23.12.2024
(51) Int. Cl.: C09K 3/00, D21H 17/26, D21H 17/59, D21H 19/32, D21H 19/34, D21H 21/14

(54) **AQUEOUS OIL-RESISTANT AGENT COMPOSITION, METHOD FOR PRODUCING AQUEOUS OIL-RESISTANT AGENT COMPOSITION, METHOD FOR OIL RESISTANCE TREATMENT FOR PAPER, AND OIL-RESISTANT PAPER**

(30) Priority: 26.12.2023 JP 2023219384
(71) Applicant: SHIN-ETSU CHEMICAL CO., LTD., Tokyo 100-0005 (JP)
(72) Inventor: TOYOMASU, Tomoya, Annaka-shi, Gunma 379-0224 (JP); TAKEWAKI, Kazuyuki, Annaka-shi, Gunma 379-0224 (JP); NAKAYAMA, Ken, Annaka-shi, Gunma 379-0224 (JP)
(74) Representative: Angerhausen, Christoph
(86) International application number: PCT/JP2024/045387
(87) International publication number: WO 2025/142817

(57) **Abstract**

Provided is an aqueous oil-resistant agent composition that can provide oil-resistant paper having high oil resistance and high air permeability and that is a non-fluororesin-based aqueous oil-resistant agent composition with health and environmental compatibility, containing neither a fluorine-based resin nor an organic solvent. The aqueous oil-resistant agent composition includes a cellulose-based resin (A), an addition-curing silicone emulsion (B), water (E), and a platinum group metal-based catalyst (F), and the addition-curing silicone emulsion (B) includes an alkenyl group-containing organopolysiloxane (G), an organohydrogen polysiloxane (H), a surfactant (I), and water (J).

## Description

### Technical Field

The present invention relates to an aqueous oil-resistant agent composition, a method of producing an aqueous oil-resistant agent composition, a method for oil-resistant treatment for paper, and oil-resistant paper.

### Background Art

Oil resistance and water resistance are imparted to paper trays, such as wrapping paper, packaging containers, and food trays, used for fast foods that contain a large amount of oil and moisture, or for fried, baked, or other cooked foods, so as to prevent contamination of the surrounding environment by penetration of oil or water from the food.

In oil-resistant paper or an oil-resistant container for food, polyethylene-laminated paper in which a polyethylene film is laminated on one surface of a paper substrate has been used, but polyethylene-laminated paper has problems with its low air permeability, easily leading to a decrease in food flavor and storage stability, difficulty in removal of the polyethylene film when recycling, and poor recyclability. There is also a strong movement to eliminate plastics, and the development of oil-resistant paper not containing polyethylene laminate has been demanded.

In order to impart oil resistance and water resistance to paper, fluororesin-based oil-resistant agents have been generally used, and, for example, a method of providing an oil-resistant layer on a surface of a paper substrate by coating a fluororesin-based oil-resistant agent, a method of impregnating a paper substrate with a fluororesin-based oil-resistant agent, or a method of internally adding a fluororesin-based oil-resistant agent to pulp slurry is adopted. However, the fluororesin-based oil-resistant agent is undesirable from health and environmental perspectives because of its low-decomposability and bioaccumulation, and in recent years, an oil-resistant agent not containing a fluorine-based resin (non-fluororesin-based oil-resistant agent) has been demanded.

Accordingly, as a non-fluororesin-based oil-resistant agent, for example, a polyvinyl alcohol (PVA)-based resin or a hydrophilic resin that forms a polysaccharide coating has been widely used, and it is known that excellent oil resistance is achieved. For example, Patent document 1 discloses oil-resistant paper having a surface coated with a composition containing a PVA-based resin and a silicone-based emulsion. It is also known that acrylic or paraffin wax emulsions described in Patent documents 2, 3, and 4 also have excellent oil resistance. Furthermore, Patent document 5 describes a water and oil repellent composition containing a silicone-based emulsion, a cellulose-based resin, and a carboxylic acid.

### PRIOR ART DOCUMENTS

### Patent documents

Patent document 1: JP-A-2005-139418
Patent document 2: JP-A-2013-237941
Patent document 3: JP-A-2020-122250
Patent document 4: JP-A-2022-188338
Patent document 5: JP-A-2006-257159

### Summary of Invention

### Technical Problem

However, in the case of non-fluororesin-based oil-resistant agents, it is necessary to increase the density of the substrate or to use large amounts of fillers or oil-resistant agents in order to achieve sufficient oil resistance and prevent the seepage of oil and fat components. As a result, although oil resistance can be improved, air permeability becomes inadequate, which tends to cause deterioration in food flavor and storage stability. For example, in order to impart oil resistance and water resistance to a paper substrate by application of the composition described in Patent document 1 or 5, it is necessary not only to coat the surface of a paper substrate with a composition forming a coating, but also to use a filler for the paper substrate, and there is a concern that the air permeability of the resulting oil-resistant paper may decrease. In the oil-resistant paper described in Patent documents 2, 3, and 4, although air permeability is observed, the coating amount of the oil-resistant agent is large, and the air permeance is 100 seconds or more in all cases, which is not as good as that of the fluororesin-based oil-resistant agent.

As described above, no oil-resistant paper has yet been developed that achieves both high oil resistance and high air permeability using a non-fluororesin-based oil-resistant agent, and in this regard, the actual situation is that there remains room for improvement.

Accordingly, it is an object of the present invention to provide an oil-resistant agent composition that can provide oil-resistant paper having high oil resistance and high air permeability and that is a non-fluororesin-based aqueous oil-resistant agent composition with health and environmental compatibility, containing neither a fluorine-based resin nor an organic solvent.

### Solution to Problem

The present inventors have conducted extensive research to achieve the above object and, as a result, have found that the following aqueous oil-resistant agent composition can achieve the above object, and the present invention has been accomplished.

That is, the present invention provides the oil-resistant agent composition and so on as set forth below.

<1> An aqueous oil-resistant agent composition comprising the components (A), (B), (E), and (F) of:
   (A) a cellulose-based resin having a viscosity of 2 to 10,000 mPa·s in a 2% aqueous solution at 20°C in an amount of 100 parts by mass;
   (B) an addition-curing silicone emulsion in an amount of 10 to 10,000 parts by mass;
   (E) water in an amount of 1,000 to 50,000 parts by mass; and
   (F) a platinum group metal-based catalyst in a catalytic amount,
   wherein the addition-curing silicone emulsion (B) includes:
   (G) an alkenyl group-containing organopolysiloxane containing at least two alkenyl groups bonded to silicon atoms per molecule and having a viscosity of 5 mPa·s or more at 25°C in an amount of 5% to 40% by mass of the component (B), wherein the alkenyl number of the whole component (G), defined as the number of moles of the alkenyl groups bonded to silicon atoms contained in 100 g of the whole component (G), is greater than 0.1 mol/100 g;
   (H) an organohydrogen polysiloxane containing at least two hydrogen atoms bonded to silicon atoms (SiH groups) per molecule in an amount expressed by % by mass such that the number of moles of the SiH groups in the component (H) is 1 to 5 times the number of moles of the alkenyl groups in the component (G);
   (I) a surfactant in an amount of 0.1% to 10% by mass of the component (B);
      and
   (J) water in an amount of 10% to 90% by mass of the component (B).
<2> An aqueous oil-resistant agent composition comprising the components (A), (C), (D), (E), and (F) of:
   (A) a cellulose-based resin having a viscosity of 2 to 10,000 mPa·s in a 2% aqueous solution at 20°C in an amount of 100 parts by mass;
   (C) a silicone emulsion in an amount of 5 to 5,000 parts by mass;
   (D) a silicone emulsion;
   (E) water in an amount of 1,000 to 50,000 parts by mass; and
   (F) a platinum group metal-based catalyst in a catalytic amount,
   wherein the silicone emulsion (C) includes:
   (G) an alkenyl group-containing organopolysiloxane containing at least two alkenyl groups bonded to silicon atoms per molecule and having a viscosity of 5 mPa·s or more at 25°C in an amount of 5% to 60% by mass of the component (C), wherein the alkenyl number of the whole component (G), defined as the number of moles of the alkenyl groups bonded to silicon atoms contained in 100 g of the whole component (G), is greater than 0.1 mol/100 g;
   (I) a surfactant in an amount of 0.1% to 10% by mass of the component (C); and
   (J) water in an amount of 10% to 90% by mass of the component (C), and

   wherein the silicone emulsion (D) includes:
      (H) an organohydrogen polysiloxane containing at least two hydrogen atoms bonded to silicon atoms per molecule in an amount of 5% to 60% by mass of the component (D);
      (I) a surfactant in an amount of 0.1% to 10% by mass of the component (D); and
      (J) water in an amount of 10% to 90% by mass of the component (D),
   wherein the content of the component (D) in the composition is determined such that the number of moles of the SiH groups of the component (H) in the component (D) is 1 to 5 times the number of moles of the alkenyl groups of the component (G) in the component (C).
<3> The aqueous oil-resistant agent composition according to <1> or <2>, wherein the cellulose-based resin as the component (A) is a cellulose ether in which 0.5 to 2.5 hydroxy groups per glucose ring unit of cellulose are substituted with alkoxy groups.
<4> The aqueous oil-resistant agent composition according to any one of<1> to <3>, wherein the component (G) includes at least two types of organopolysiloxanes containing a linear organopolysiloxane containing alkenyl groups only at both ends thereof and a linear organopolysiloxane containing alkenyl groups in a side chain and at both ends thereof.
<5> The aqueous oil-resistant agent composition according to any one of <1> to <4>, wherein the component (G) is a linear alkenyl group-containing organopolysiloxane represented by the following average composition formula (1-1): 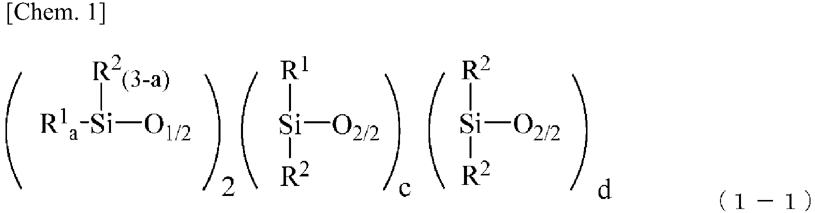 wherein, in the formula (1-1), each R¹ independently represents an alkenyl group-containing organic group having 2 to 10 carbon atoms; each R² independently represents one group selected from a hydroxy group, an alkoxy group, and an unsubstituted or substituted monovalent hydrocarbon group free of alkenyl groups; and a, c, and d are each a number equal to or greater than 0 and satisfy 0 ≤ a ≤ 3, 2 ≤ 2a + c, and 5 ≤ c + d.
<6> The aqueous oil-resistant agent composition according to any one of <1> to <5>, wherein in the component (H), the proportion of the total number of hydrogen atoms bonded to silicon atoms to the total number of hydrogen atoms bonded to silicon atoms and groups bonded to silicon atoms is 15% to 50%.
<7> The aqueous oil-resistant agent composition according to any one of any one of <3> to <6>, wherein the silicone emulsion as the component (B) further includes a polyvinyl alcohol (PVA)-based resin in an amount of 0.5% to 10% by mass of the component (B).
<8> The aqueous oil-resistant agent composition according to any one of <2> to <6>, wherein at least one of the silicone emulsion of the component (C) and the silicone emulsion of the component (D) further includes a polyvinyl alcohol (PVA)-based resin in an amount of 0.5% to 10% by mass of the component (C) or the component (D).
<9> The aqueous oil-resistant agent composition according to any one of <1> to <8>, wherein the total mass of the component (G) and the component (H) is 60 to 2,000 parts by mass based on 100 parts by mass of the component (A).
<10> A method of producing the aqueous oil-resistant agent composition according to any one of <1>, <3> to <7>, and <9>, the method comprising:
   (Step 1) mixing and emulsifying the components (G), (H), (I), and (J) of:
      (G) an alkenyl group-containing organopolysiloxane containing at least two alkenyl groups bonded to silicon atoms per molecule and having a viscosity of 5 mPa·s or more at 25°C in an amount of 5% to 40% by mass of the component (B), wherein the alkenyl number of the whole component (G), defined as the number of moles of the alkenyl groups bonded to silicon atoms contained in 100 g of the whole component (G), is greater than 0.1 mol/100 g,
      (H) an organohydrogen polysiloxane containing at least two hydrogen atoms bonded to silicon atoms (SiH groups) per molecule in an amount expressed by % by mass such that the number of moles of the SiH groups in the component (H) is 1 to 5 times the number of moles of the alkenyl groups in the component (G),
      (I) a surfactant in an amount of 0.1% to 10% by mass of the component (B), and
      (J) water in an amount of 10% to 90% by mass of the component (B)
      to prepare an addition-curing silicone emulsion (B); and
   (Step 2) mixing the components (A), (E), and (F) of:
      (A) a cellulose-based resin having a viscosity of 2 to 10,000 mPa·s in a 2% aqueous solution at 20°C in an amount of 100 parts by mass,
      (E) water in an amount of 1,000 to 50,000 parts by mass, and
      (F) a platinum group metal-based catalyst in a catalytic amount
      with 10 to 10,000 parts by mass of the addition-curing silicone emulsion (B) prepared in the (Step 1).
<11> A method of producing the aqueous oil-resistant agent composition according to any one of <2> to <6>, <8>, and <9> the method comprising:
   (Step 1') mixing and emulsifying the components (G), (I), and (J) of:
      (G) an alkenyl group-containing organopolysiloxane containing at least two alkenyl groups bonded to silicon atoms per molecule and having a viscosity of 5 mPa·s or more at 25°C in an amount of 5% to 60% by mass of the component (C), wherein the alkenyl number of the whole component (G), defined as the number of moles of the alkenyl groups bonded to silicon atoms contained in 100 g of the whole component (G), is greater than 0.1 mol/100 g,
      (I) a surfactant in an amount of 0.1% to 10% by mass of the component (C), and
      (J) water in an amount of 10% to 90% by mass of the component (C)
      to prepare a silicone emulsion (C);
   (Step 1") mixing and emulsifying the components (H), (I), and (J) of:
      (H) an organohydrogen polysiloxane containing at least two hydrogen atoms bonded to silicon atoms per molecule in an amount of 5% to 60% by mass of the component (D),
      (I) a surfactant in an amount of 0.1% to 10% by mass of the component (D), and
      (J) water in an amount of 10% to 90% by mass of the component (D)
      to prepare a silicone emulsion (D); and
   (Step 2') mixing
      5 to 5,000 parts by mass of the silicone emulsion (C) prepared in the (Step 1'),
      the silicone emulsion (D) prepared in the (Step 1") in an amount such that the number of moles of the SiH groups of the component (H) in the component (D) is 1 to 5 times the number of moles of the alkenyl groups of the component (G) in the component (C), and
      the components (A), (E), and (F) defined as:
         (A) a cellulose-based resin, having a viscosity of 2 to 10,000 mPa·s in a 2% aqueous solution at 20°C, in an amount of 100 parts by mass;
         (E) water in an amount of 1,000 to 50,000 parts by mass; and
         (F) a platinum group metal-based catalyst in a catalytic amount.
<12> A method for oil-resistant treatment for paper, comprising internally adding the aqueous oil-resistant agent composition, according to any one of <1> to <9>, to pulp slurry or externally adding the aqueous oil-resistant agent composition, according to any one of <1> to <9>, to a paper substrate.
<13> An oil-resistant paper treated with the aqueous oil-resistant agent composition according to according to any one of <1> to <9>, wherein the oil-resistant paper exhibits an air permeance of 1,000 seconds or less when the air permeance is measured as an Oken air permeance in accordance with JAPAN TAPPI Paper and Pulp Test Method No. 5-2:2000.

### Advantageous Effects of Invention

The present invention relates to the one that combines a cellulose-based resin, having excellent affinity with paper, with a silicone having good water resistance and air permeability to take advantage of the merits of both materials, and a paper substrate may be treated with the composition of the present invention, made by combining materials with specific structures under specific conditions, and be cured to obtain an oil-resistant paper having excellent oil resistance and water resistance and having high air permeability.

The oil-resistant paper of the present invention has high air permeability and thereby can prevent oil staining without impairing the flavor of food wrapped therewith.

Furthermore, both of the cellulose-based resin and silicone, contained in the aqueous oil-resistant agent composition of the present invention, are materials having high environmental safety and being harmless and are suitable for use as a substitute for organic fluorine compounds. In addition, since the aqueous oil-resistant agent composition of the present invention does not contain an organic solvent, it is possible to avoid disadvantages such as an environmental problem and a biological hazard associated with the use of an organic solvent. The paper substrate treated with the composition of the present invention produces a product that is easily recycled and has a small environmental load and can solve the harmfulness and environmental problems attributed to fluorine compounds.

### Description of Embodiments

### [Aqueous oil-resistant agent composition]

The aqueous oil-resistant agent composition of the present invention will now be described in more detail. Herein, "%" indicates a mass-based proportion unless otherwise specified.

### (A) Cellulose-based resin

The cellulose-based resin of the component (A) is a compound in which the hydroxyl groups of the cellulose molecule have been chemically modified through the introduction of different substituent groups.

The cellulose-based resin has a viscosity of 2 to 10,000 mPa·s in a 2% aqueous solution at 20°C, preferably 10 to 8,000 mPa·s, and more preferably 20 to 4,000 mPa·s. If the viscosity of a 2% aqueous solution at 20°C is less than 2 mPa·s, the oil resistance becomes insufficient, and if the viscosity is greater than 10,000 mPa·s, the coating properties of the composition deteriorate. The viscosity at 20°C is a value measured at 20°C with a BM-type viscometer (for example, manufactured by Tokyo Keiki Inc.). Depending on the viscosity, the rotor, rotation speed, and rotation time are selected appropriately based on a usual method (the same applies hereinafter).

The cellulose-based resin suitable for use in the present invention is preferably a cellulose ether substituted by reacting the hydroxy groups of cellulose with an etherifying agent, or an esterified cellulose ester and particularly preferably a cellulose ether. Many of these cellulose ethers are approved as a food additive, a medicine, or a cosmetic ingredient, and it is known that these materials are not only harmless to the human body but also moderately biodegradable and are extremely environmentally friendly.

Examples of the cellulose ether include alkyl celluloses (such as methyl cellulose and ethyl cellulose) obtained by substituting the hydroxy groups of cellulose with alkoxy groups; hydroxyalkyl celluloses (such as hydroxyethyl cellulose and hydroxypropyl cellulose) obtained by substituting the hydroxy groups of cellulose with hydroxyalkoxy groups; hydroxyalkyl alkyl celluloses (such as hydroxypropylmethyl cellulose) obtained by substituting the hydroxy groups of cellulose with alkoxy groups and hydroxyalkoxy groups; and carboxyalkyl celluloses (such as carboxymethyl cellulose) obtained by substituting the hydroxy groups of cellulose with carboxyalkoxy groups. Preferred are methyl cellulose, ethyl cellulose, and hydroxypropylmethyl cellulose, and more preferred is methyl cellulose.

Examples of the cellulose ester include cellulose acetate and cellulose acetate phthalate.

The substitution degree of a cellulose ether or cellulose ester refers to the number of hydroxy groups substituted with an etherifying agent or esterifying agent per glucose ring unit of cellulose. This substitution degree is preferably 0.5 to 2.5, more preferably 0.8 to 2.2, and further preferably 1.0 to 2.0. If the substitution degree is less than 0.5, the solubility in water is low, and the workability when the composition is produced may be deteriorated. If the substitution degree is greater than 2.5, sufficient oil resistance may not be provided.

When the hydroxy groups per molecule of a cellulose ether or cellulose ester are substituted with two or more types of substituents, the total value of the substitution degrees of the two or more types of substituents is preferably 0.5 to 2.5, more preferably 0.8 to 2.2, and further preferably 1.0 to 2.0.

In the present invention, generally commercially available cellulose ethers can be used, and specifically, examples thereof include METHOCEL, ETHOCEL (manufactured by The Dow Chemical Company), NATROSOL (manufactured by Ashland Inc.), HEC Daicel and CMC Daicel (manufactured by Daicel Corporation), Fujichem HEC (manufactured by Sumitomo Seika Chemicals Company), Cellogen (manufactured by DKS Co., Ltd.), and Metolose (manufactured by Shin-Etsu Chemical Co., Ltd.).

The cellulose-based resin of the component (A) may be used alone or two or more types of them may be used in combination.

The content of the component (A) in the composition of the present invention is preferably 3% to 50% by mass and more preferably 5% to 40% by mass based on the total amount of components excluding water.

The total amount of components excluding water refers to the total amount of the components in the composition excluding the water (E) and the water (J) contained in an addition-curing silicone emulsion (B), in a silicone emulsion (C), in a silicone emulsion (D), or in a catalyst composition (K) to be described later.

The aqueous oil-resistant agent composition of the present invention contains a silicone emulsion which is either:
<1> (B) an addition-curing silicone emulsion, or
<2> (C) a silicone emulsion and (D) a silicone emulsion.

The addition-curing silicone emulsion (B) contains (G) an alkenyl group-containing organopolysiloxane, (H) an organohydrogen polysiloxane, (I) a surfactant, and (J) water.

The silicone emulsion (C) contains (G) an alkenyl group-containing organopolysiloxane, (I) a surfactant, and (J) water.

The silicone emulsion (D) contains (H) an organohydrogen siloxane, (I) a surfactant, and (J) water.

The components (G) to (J) will be described later.

Herein, the aqueous oil-resistant agent composition containing the addition-curing silicone emulsion (B) may be referred to as "aqueous oil-resistant agent composition <1>", and the aqueous oil-resistant agent composition containing the silicone emulsion (C) and the silicone emulsion (D) may be referred to as "aqueous oil-resistant agent composition <2>".

Emulsification for obtaining the components (B) to (D) may be performed using a general emulsifying and dispersing device. Examples of the emulsifying and dispersing device include a high-speed rotation centrifugal radiation-type agitator such as a homo disperser, a high-speed rotary shear-type agitator such as a homomixer, a high-pressure jet-type emulsifying and dispersing device such as a pressure homogenizer, a colloid mill, and an ultrasonic emulsifier. The volume average particle diameter of each of the obtained emulsions of the components (B) to (D) measured with a laser diffraction-scattering particle size distribution analyzer is preferably 50 to 10,000 nm and more preferably 100 to 1,500 nm.

### (B) Addition-curing silicone emulsion

The blending amount of the component (B) is 10 to 10,000 parts by mass based on 100 parts by mass of the component (A), and is preferably 100 to 4,000 parts by mass and further preferably 250 to 2,000 parts by mass. If the blending amount of the component (B) is less than 10 parts by mass based on 100 parts by mass of the component (A), the water resistance becomes insufficient, and if the blending amount is larger than 10,000 parts by mass, the oil resistance becomes insufficient.

The content proportion of the component (G) of the component (B) is 5% to 40% by mass and is preferably 10% to 35% by mass and further preferably 15% to 30% by mass. If the content proportion of the component (G) of the component (B) is outside the above range, the oil resistance and the water resistance decrease.

The content proportion of the component (H) of the component (B) is determined in terms of % by mass such that the number of moles of the SiH groups in the component (H) is 1 to 5 times, preferably 1.1 to 3 times, and further preferably 1.2 to 2.5 times the number of moles of the alkenyl groups in the component (G). If the content proportion of the component (H) of the component (B) is outside the above range, the oil resistance and the water resistance decrease.

The content proportion of the component (I) of the component (B) is 0.1% to 10% by mass and is preferably 0.2% to 5% by mass and further preferably 0.3% to 3% by mass. If the content proportion of the component (I) of the component (B) is less than the above lower limit, emulsification becomes difficult, and if the content proportion is higher than the above upper limit, the oil resistance and the water resistance decrease.

The content proportion of the component (J) of the component (B) is 10% to 90% by mass and is preferably 20% to 80% by mass, and further preferably 30% to 70% by mass. If the content proportion of the component (J) of the component (B) is less than the above lower limit, dispersion becomes difficult, and if the content proportion is higher than the above upper limit, the stability over time of the emulsion becomes low.

In the aqueous oil-resistant agent composition <1>, the total mass of the component (G) and component (H) is preferably 60 to 2,000 parts by mass based on 100 parts by mass of the component (A) and is more preferably 150 to 1,000 parts by mass and further preferably 200 to 500 parts by mass.

### (C) Silicone emulsion containing organopolysiloxane having alkenyl groups

The blending amount of the component (C) is 5 to 5,000 parts by mass based on 100 parts by mass of the component (A) and is preferably 50 to 2,000 parts by mass, and further preferably 125 to 1,000 parts by mass. If the blending amount of the component (C) is less than 5 parts by mass based on 100 parts by mass of the component (A), the water resistance becomes insufficient, and if the blending amount is higher than 5,000 parts by mass, the oil resistance becomes insufficient.

The content proportion of the component (G) of the component (C) is 5% to 60% by mass, and is preferably 10% to 50% by mass, and further preferably 15% to 40% by mass. If the content proportion of the component (G) of the component (C) is outside the above range, the oil resistance and the water resistance decrease.

The content proportion of the component (I) of the component (C) is 0.1% to 10% by mass and is preferably 0.2% to 5% by mass and further preferably 0.3% to 3% by mass. If the content proportion of the component (I) of the component (C) is less than the above lower limit, emulsification becomes difficult, and if the content proportion is higher than the above upper limit, the oil resistance and the water resistance decrease.

The content proportion of the component (J) of the component (C) is 10% to 90% by mass and is preferably 20% to 80% by mass and further preferably 30% to 70% by mass. If the content proportion of the component (J) of the component (C) is less than the above lower limit, dispersion becomes difficult, and if the content proportion is higher than the above upper limit, the stability over time of the emulsion becomes low.

### (D) Organohydrogen polysiloxane-containing silicone emulsion

The blending amount of the component (D) is determined in terms of % by mass such that the number of moles of the SiH groups in the component (D) is 1 to 5 times, preferably 1.1 to 3.0 times, and further preferably 1.2 to 2.5 times the number of moles of the alkenyl groups in the component (C). If the blending amount of the component (D) is outside the above range, the oil resistance and the water resistance decrease.

The content proportion of the component (H) of the component (D) is 5% to 60% by mass and is preferably 10% to 50% by mass and further preferably 15% to 40% by mass. If the content proportion of the component (H) of the component (D) is outside the above range, the oil resistance and the water resistance decrease.

The content proportion of the component (I) of the component (D) is 0.1% to 10% by mass and is preferably 0.2% to 5% by mass and further preferably 0.3% to 3% by mass. If the content proportion of the component (I) of the component (D) is less than the above lower limit, emulsification becomes difficult, and if the content proportion is higher than the above upper limit, the oil resistance and the water resistance decrease.

The content proportion of the component (J) of the component (D) is 10% to 90% by mass and is preferably 20% to 80% by mass and further preferably 30% to 70% by mass. If the content proportion of the component (J) of the component (D) is less than the above lower limit, dispersion becomes difficult, and if the content proportion is higher than the above upper limit, the stability over time of the emulsion becomes low.

In the aqueous oil-resistant agent composition <2>, the total mass of the component (G) and component (H) is preferably 60 to 2,000 parts by mass based on 100 parts by mass of the component (A) and is more preferably 150 to 1,000 parts by mass and further preferably 200 to 500 parts by mass.

### · (G) Alkenyl group-containing organopolysiloxane

The component (G) is an organopolysiloxane containing at least two alkenyl groups bonded to silicon atoms per molecule and having a viscosity of 5 mPa·s or more at 25°C.

The number of alkenyl groups bonded to silicon atoms per molecule of the component (G) is at least 2, preferably 2 to 500, more preferably 2 to 100, and further preferably 2 to 30. If the number of alkenyl groups bonded to silicon atoms per molecule of the component (G) is less than 2, crosslinking properties are not provided, which decreases oil resistance and is undesirable. In contrast, if the number of the alkenyl groups bonded to silicon atoms per molecule of the component (G) is larger than 500, the curing may take a long period of time.

The viscosity of the component (G) at 25°C is 5 mPa·s or more and is preferably 10 to 10,000 mPa·s, more preferably 20 to 5,000 mPa·s, and further preferably 50 to 1,000 mPa·s. If the viscosity of the component (G) at 25°C is less than 5 mPa·s, the preparation of an emulsion is difficult, and the oil resistance and stability may decrease. The upper limit of the viscosity of the component (G) at 25°C is not limited, but can be, for example, 100,000 mPa·s.

When multiple types of the component (G) are used, an organopolysiloxane with a low viscosity corresponding to one type of the component (G) and a highly viscous or raw rubber-like organopolysiloxane corresponding to another one of the component (G) may be mixed to adjust the viscosity within the above range.

The alkenyl number bonded to silicon atoms in the whole component (G) is a value greater than 0.1 mol/100 g and is preferably 0.13 mol/100 g or more, and further preferably 0.15 mol/100 g or more. If the alkenyl number bonded to silicon atoms in the whole component (G) is 0.1 mol/100 g or less, the crosslinking properties are low, and the oil resistance decreases. The upper limit of the alkenyl number of the component (G) is not limited, but can be, for example, 0.7 mol/100 g. This alkenyl number refers to a value of the number of moles of the alkenyl groups bonded to silicon atoms contained in 100 g of the whole component (G) and can be usually calculated from the iodine number determined by a Hanus method (a method of reacting a compound to a Hanus reagent, then reacting it to a potassium iodide aqueous solution, and titrating the generated iodine with a sodium thiosulfate, in accordance with JIS K 0070) (the same applies hereinafter).

The molecular structure of the component (G) is not particularly limited and can be a linear, branched, or cyclic structure, preferably a linear structure.

The component (G) may be used alone or two or more types of them may be used in combination. When two or more types of the component (G) are used in combination, it is sufficient that the average alkenyl number calculated from the total of the component (G) be greater than 0.1 mol/100 g.

When two or more types of the component (G) are used in combination, their molecular structures are also not particularly limited, but it is preferable to use a linear organopolysiloxane containing alkenyl groups at both ends only and a linear organopolysiloxane containing alkenyl groups in a side chain and at both ends in combination, and it is more preferable to use organopolysiloxanes, each having an alkenyl number of greater than 0.1 mol/100 g, in combination.

The component (G) is a component for achieving the oil resistance and water resistance of the composition, and examples thereof include those having a structure represented by an average composition formula (1): 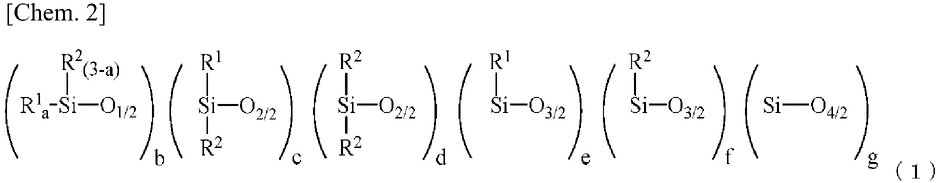 (wherein, in the formula (1), each R¹ independently represents an alkenyl group-containing organic group having 2 to 10 carbon atoms; each R² independently represents one group selected from a hydroxy group, an alkoxy group, and an unsubstituted or substituted monovalent hydrocarbon group free of alkenyl groups; and a, b, c, d, e, f, and g are each independently a number equal to or greater than 0 and satisfy 0 ≤ a ≤ 3, 1 ≤ b, 2 ≤ ab + c + e, and 5 ≤ b + c + d + e + f + g).

R¹ is an alkenyl group-containing organic group having 2 to 10 carbon atoms, preferably 2 to 8 carbon atoms, and more preferably 2 to 6 carbon atoms. Examples of R¹ include alkenyl groups such as a vinyl group, an allyl group, and a hexenyl group.

R² is a group selected from a hydroxy group, an alkoxy group, and an unsubstituted or substituted monovalent hydrocarbon group free of alkenyl groups.

Examples of the alkoxy group represented by R² include a methoxy group, an ethoxy group, a propoxy group, and an isopropoxy group.

The number of carbon atoms of the unsubstituted or substituted monovalent hydrocarbon group, free of alkenyl groups, represented by R² is preferably 1 to 12 and more preferably 1 to 10. Examples of the unsubstituted or substituted monovalent hydrocarbon group include an alkyl group preferably having 1 to 6 carbon atoms, such as a methyl group, an ethyl group, a propyl group, and a butyl group; a cycloalkyl group preferably having 5 to 8 carbon atoms, such as a cyclohexyl group; an aryl group preferably having 6 to 10 carbon atoms, such as a phenyl group and a tolyl group; and an aralkyl group preferably having 7 to 10 carbon atoms, such as a benzyl group. In particular, the unsubstituted or substituted monovalent hydrocarbon group is preferably a methyl group or a phenyl group, and particularly preferably a methyl group.

In the alkenyl group-containing organopolysiloxane represented by the formula (1), the proportion of the number of methyl groups to the total number of R² is preferably 70% or more, more preferably 80% or more, and further preferably 90% or more.

In the formula (1), a, b, c, d, e, f, and g are each independently a number equal to or greater than 0.
a satisfies 0 ≤ a ≤ 3 and is preferably 0 or 1, and more preferably 1.
b is a number equal to or greater than 1 and a number satisfying 2 ≤ ab + c + e and 5 ≤ b + c + d + e + f + g.

The alkenyl group-containing organopolysiloxane represented by the formula (1) is particularly preferably linear, that is, in the formula (1), b = 2 and e = f = g = 0, a group represented by the following formula (1-1):

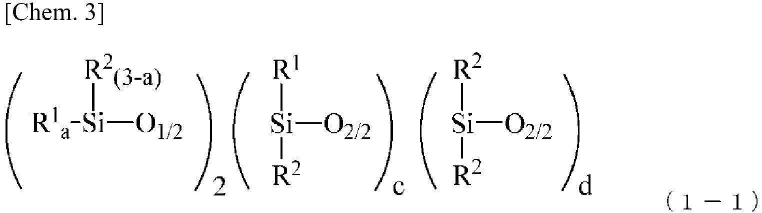

In the formula (1-1), R¹ and R² are respectively the same as those in the formula (1), a, c, and d are each a number equal to or greater than 0, and satisfy 0 ≤ a ≤ 3, 2 ≤ 2a + c, and 5 ≤ c + d.

In the formula (1-1), when the side chain includes an alkenyl group (1 ≤ c), it is more preferably 2 ≤ c ≤ 500 and 3 ≤ d ≤ 4,000, further preferably 5 ≤ c ≤ 100 and 3 ≤ d ≤ 500, and particularly preferably 10 ≤ c ≤ 50 and 3 ≤ d ≤ 300.

In the formula (1-1), when the side chain does not include an alkenyl group (c = 0), it is more preferably 3 ≤ d ≤ 30 and further preferably 3 ≤ d ≤ 20.

Examples of the component (G) include the following, but the component (G) is not limited thereto. In the following formulae, Me, Vi, and Ph represent a methyl group, a vinyl group, and a phenyl group, respectively. The bonding order of each siloxane unit shown in parentheses is not limited to the following. In each of the following formulae, the total number of repeating units of siloxane indicates an average value.

In the following formulae, z1 to z39 are each a number equal to or greater than 0. 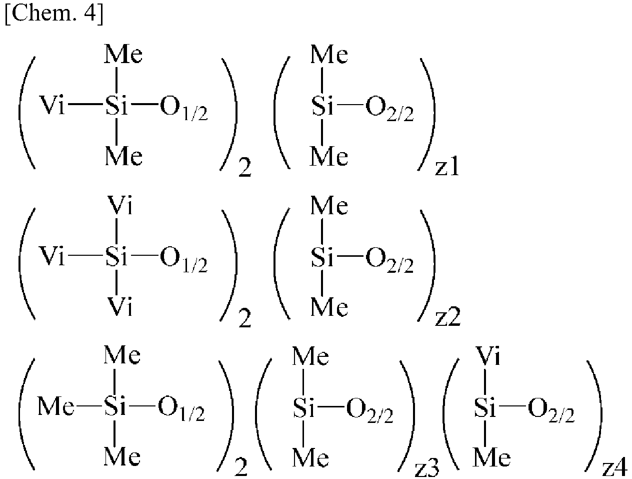 (2 ≤ z4 and 5 ≤ z3 + z4.) 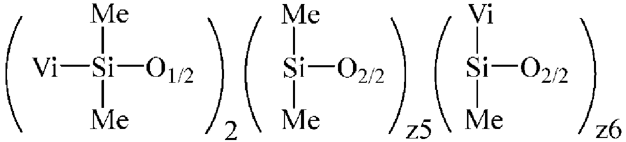 (1 ≤ z6 and 5 ≤ z5 + z6.) 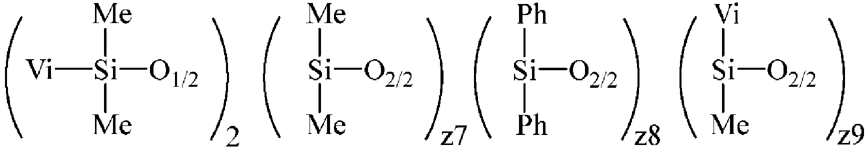 (1 ≤ z9 and 5 ≤ z7 + z8 + z9.) 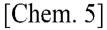 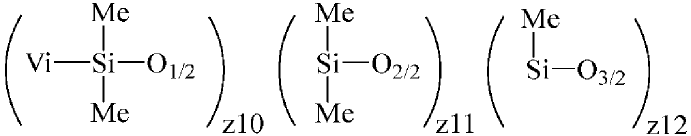 (2 ≤ z10 and 5 ≤ z10 +z11 + z12.) 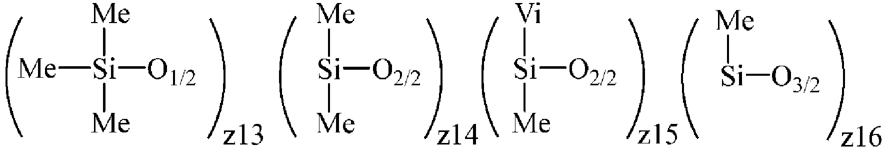 (2 ≤ z15 and 5 ≤ z13 + z14 + z15 + z16.) 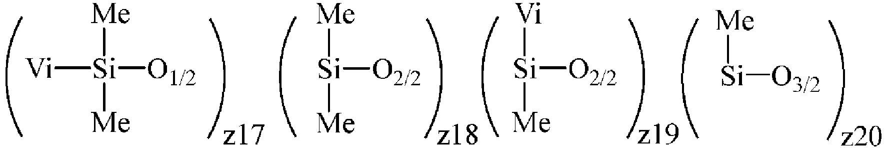 (2 ≤ z17 + z19 and 5 ≤ z17 + z18 + z19 + z20.) 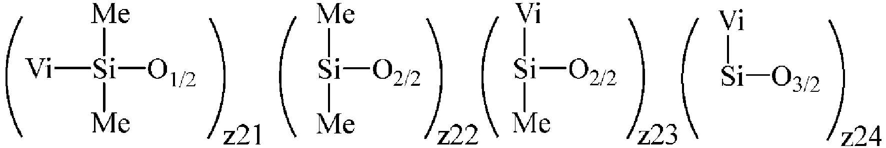 (2 ≤ z21 + z23 + z24 and 5 ≤ z21 + z22 + z23 + z24.) 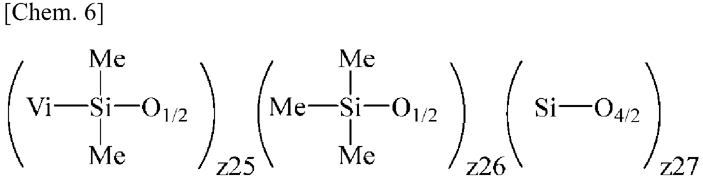 (2 ≤ z25 and 5 ≤ z25 + z26 + z27.) 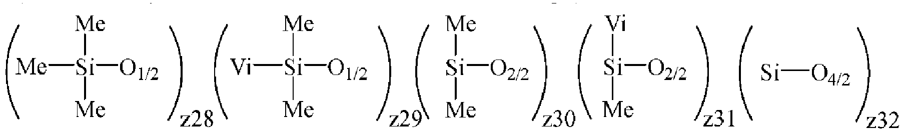 (2 ≤ z29 + z31 and 5 ≤ z28 + z29 + z30 + z31 + z32.) 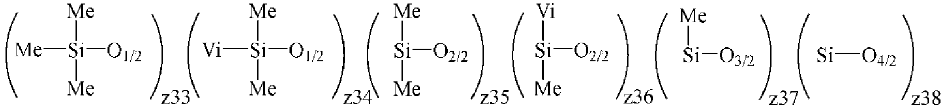 (2 ≤ z34 + z36 and 5 ≤ z33 + z34 + z35 + z36 + z37 + z38.) 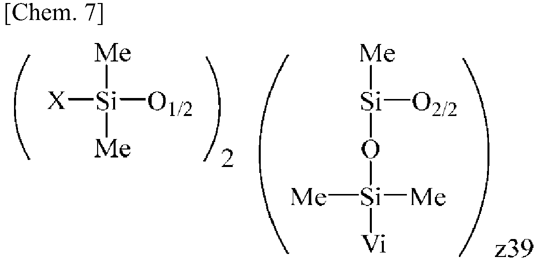 (2 ≤ z34, and each X independently represents a group selected from a methyl group, an ethyl group, a methoxy group, a vinyl group, and a hydroxy group or an oxygen atom and bonds with another atom to form a cyclic structure.)

### · (H) Organohydrogen polysiloxane

The component (H) is an organohydrogen polysiloxane containing at least two hydrogen atoms bonded to silicon atoms (hereinafter, referred to as SiH groups) per molecule. In the component (H), the proportion of the total number of SiH groups to the total number of the SiH groups and groups bonded to silicon atoms is preferably 15% to 50%, more preferably 20% to 45%, and further preferably 30% to 40%. If the proportion of SiH groups in the component (H) is less than 15%, the crosslink density decreases, and the oil resistance may decrease, and if the proportion is higher than 50%, the reactivity decreases, and the curing may take a long period of time.

The alkenyl groups contained in the component (G) and the SiH groups in the component (H) are addition-reacted to form a crosslinked structure. That is, the component (H) functions as a crosslinking agent. The blending amount of the component (H) is determined from the viewpoint of the crosslinking balance such that the ratio of the number of the SiH groups in the component (H) to the total number of the alkenyl groups in the component (G) is 1.0 to 5.0, more preferably 1.1 to 3.0, and further preferably 1.2 to 2.5. If the amount of the component (H) does not satisfy the above range, the crosslinking balance becomes inadequate, and the oil resistance and water resistance decrease.

The molecular structure of the component (H) may be a linear, branched, cyclic, or three-dimensional network structure or may be a mixture thereof. The SiH groups contained in the component (H) may be located either at the end of the molecular chain or in a midway through the molecular chain or may be located at both of them. The component (H) is preferably a linear organohydrogen polysiloxane represented by the following formula (2): 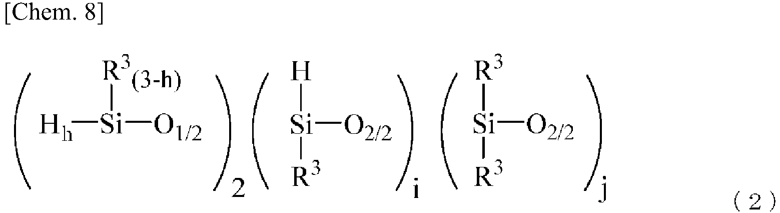 (wherein, in the formula (2), each R³ independently represents a hydroxy group or a substituted or unsubstituted monovalent hydrocarbon group having 1 to 10 carbon atoms but no aliphatic unsaturated bond, h is 0 or 1, and i and j are numbers of 0 ≤ i ≤ 200 and 0 ≤ j ≤ 200 and satisfy 2 ≤ 2h + i ≤ 200 and 3 ≤ i + j + 2 ≤ 400).

In the above formula (2), each R³ independently represents a hydroxy group or a substituted or unsubstituted monovalent hydrocarbon group having 1 to 10 carbon atoms but no aliphatic unsaturated bond. Preferable examples of the monovalent hydrocarbon group having no aliphatic unsaturated bond as R³ include an alkyl group or an aryl group, more preferably a methyl group, an ethyl group, a propyl group, or a phenyl group, and particularly preferably a methyl group.
i is a number of 0 to 200, preferably 3 to 150, and more preferably 5 to 100. j is a number of 0 to 200, preferably 0 to 100, and more preferably 5 to 50. 2h + i is a number of 2 to 200, preferably 4 to 150, more preferably 5 to 100, and further preferably 10 to 80. i + j + 2 is a number of 3 to 400, preferably 5 to 200, and more preferably 10 to 100.

Examples of the organohydrogen polysiloxane represented by the average composition formula (2) include a methylhydrogensiloxane-dimethylsiloxane cyclic copolymer, a both-end trimethylsiloxy group-blocked dimethylsiloxane-methylhydrogensiloxane copolymer, a both-end dimethylhydrogensiloxyl group-blocked dimethylpolysiloxane, a both-end dimethylhydrogensiloxyl group-blocked dimethylsiloxane-methylhydrogensiloxane copolymer, a both-end trimethylsiloxy group-blocked methylhydrogensiloxane-diphenylsiloxane copolymer, a both-end trimethylsiloxy group-blocked methylhydrogensiloxane-diphenylsiloxane-dimethylsiloxane copolymer, a both-end trimethylsiloxy group-blocked methylhydrogensiloxane-methylphenylsiloxane-dimethylsiloxane copolymer, a both-end dimethylhydrogensiloxyl group-blocked methylhydrogensiloxane-dimethylsiloxane-diphenylsiloxane copolymer, and a both-end dimethylhydrogensiloxyl group-blocked methylhydrogensiloxane-dimethylsiloxane-methylphenylsiloxane copolymer.

The component (H) may be used alone or two or more types of them may be used in combination.

Examples of the component (H) include linear or branched siloxanes represented by the following formulae, but are not limited thereto. Me and Ph in the formulae represent a methyl group and a phenyl group, respectively. The bonding order of each siloxane unit shown in parentheses is not limited to the following. In each of the following formulae, the total number of repeating units of siloxane indicates an average value.

In the following formulae, z42 to z73 are each a number satisfying that the proportion of SiH groups of the organohydrogen polysiloxane in each formula is 15% to 50%. 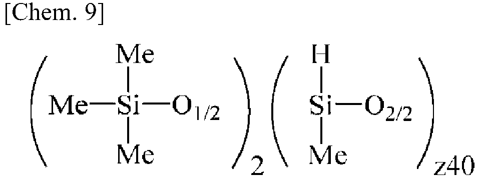 (2 ≤ z40 ≤ 200.) 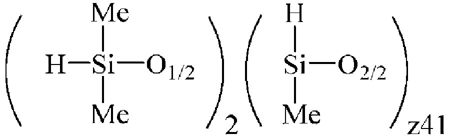 (2 ≤ z41 ≤ 200.) 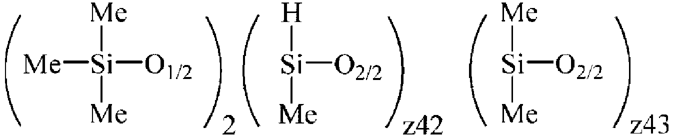 (2 ≤ z42 ≤ 200 and 1 ≤ z43 ≤ 200.) 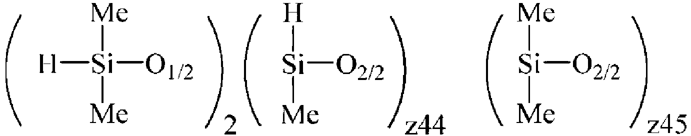 (2 ≤ z44 ≤ 200 and 1 ≤ z45 ≤ 200.) 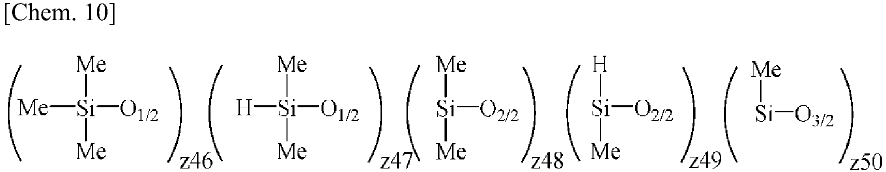 (0 ≤ z46, 0 ≤ z47, 0 ≤ z48, 2 ≤ z49, and 1 ≤ z50.) 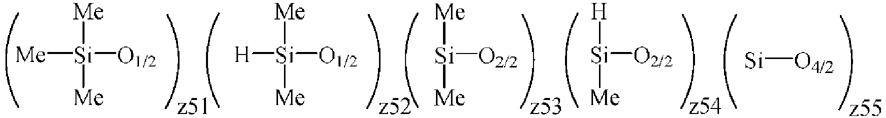 (0 ≤ z51, 0 ≤ z52, 0 ≤ z53, 2 ≤ z54, and 1 ≤ z55.) 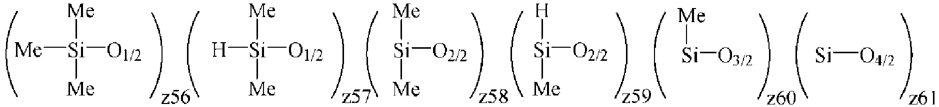 (0 ≤ z56, 0 ≤ z57, 0 ≤ z58, 2 ≤ z59, 1 ≤ z60, and 1 ≤ z61.) 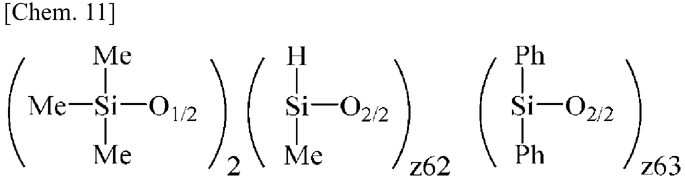 (2 ≤ z62 ≤ 200 and 1 ≤ z63 ≤ 200.) 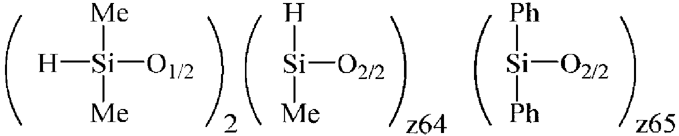 (2 ≤ z64 ≤ 200 and 1 ≤ z65 ≤ 200.) 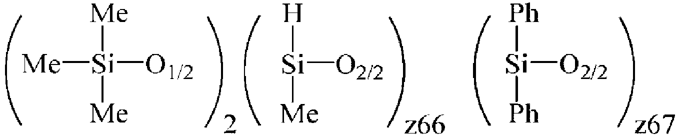 (2 ≤ z66 ≤ 200 and 1 ≤ z67 ≤ 200.) 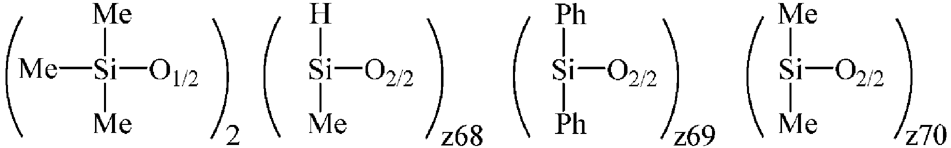 (2 ≤ z68 ≤ 200, 1 ≤ z69 ≤ 100, and 1 ≤ z70 ≤ 100.) 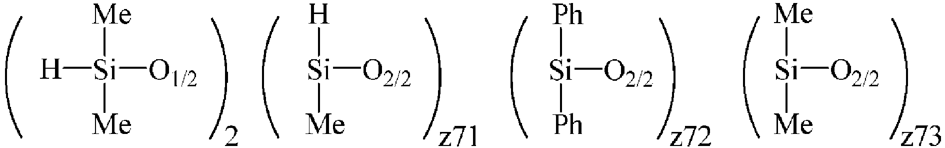 (2 ≤ z71 ≤ 200, 1 ≤ z72 ≤ 100, and 1 ≤ z73 ≤ 100.)

### · (I) Surfactant

The component (I) is a surfactant and may be any surfactant that can emulsify and disperse the component (G) and the component (H) in water without any limitation, and preferably contains a nonionic surfactant. Examples of the nonionic surfactant include polyoxyethylene alkyl ether, polyoxyethylene polyoxypropylene alkyl ether, polyoxyethylene alkylphenyl ether, polyethylene glycol fatty acid ester, sorbitan fatty acid ester, polyoxyethylene sorbitan fatty acid ester, polyoxyethylene sorbite fatty acid ester, glycerin fatty acid ester, polyoxyethylene glycerin fatty acid ester, polyglycerin fatty acid ester, propylene glycol fatty acid ester, polyoxyethylene castor oil, polyoxyethylene hydrogenated castor oil, polyoxyethylene hydrogenated castor oil fatty acid ester, polyoxyethylene alkylamine, polyoxyethylene fatty acid amide, polyoxyethylene-modified organopolysiloxane, and polyoxyethylene polyoxypropylene-modified organopolysiloxane. In particular, preferred are polyoxyethylene lauryl ether, polyoxyethylene oxypropylene lauryl ether, polyoxyethylene acetylene glycol ether, polyoxyethylene sorbitan monolaurate, and polyoxyethylene styrenated phenyl ether, and more preferred are polyoxyethylene lauryl ether and polyoxyethylene styrenated phenyl ether.

The nonionic surfactant may be used alone or two or more types of them may be used in combination. In order to obtain a stable emulsion composition, it is preferable that a single surfactant or two or more nonionic surfactants as a whole has an HLB of 10 to 15.

An anionic surfactant or a cationic surfactant can also be used, but is preferably used in combination with a nonionic surfactant from the perspective of dispersibility.

Examples of the anionic surfactant include an alkyl sulfate ester salt such as sodium lauryl sulfate, a polyoxyethylene alkyl ether sulfate ester salt, a polyoxyethylene alkylphenyl ether sulfate ester salt, an alkylbenzene sulfonate, a polyoxyethylene alkylphenyl ether sulfonate, an alkyldiphenyl ether disulfonate, an alkane sulfonate, an N-acyl taurate, a dialkyl sulfosuccinate, a monoalkyl sulfosuccinate, a polyoxyethylene alkyl ether sulfosuccinate, a fatty acid salt, a polyoxyethylene alkyl ether carboxylate, an N-acyl amino acid salt, a monoalkyl phosphate ester salt, a dialkyl phosphate ester salt, and a polyoxyethylene alkyl ether phosphate ester salt.

Examples of the cationic surfactant include an alkyltrimethylammonium salt, a dialkyldimethylammonium salt, a polyoxyethylene alkyldimethylammonium salt, a dipolyoxyethylene alkylmethylammonium salt, a tripolyoxyethylene alkylammonium salt, an alkylbenzyldimethylammonium salt, an alkylpyridinium salt, a monoalkylamine salt, and a monoalkylamideamine salt.

In each silicone emulsion of the component (B), component (C), and component (D), in order to help the emulsification of the component (G) and component (H) and improve the stability, a water-soluble resin can be used as an emulsifying aid in combination with the surfactant. Examples of the water-soluble resin include a PVA-based resin, a cellulose derivative, and a carboxyvinyl polymer, and the PVA-based resin is more preferable. A preferable PVA-based resin has a viscosity of 10 to 50 mPa·s in a 4% aqueous solution at 20°C and a saponification degree of 85 to 95 mol%, and a more preferable PVA-based resin has a viscosity of 15 to 30 mPa·s and a saponification degree of 87.5 to 92 mol%. This water-soluble resin may function as a thickener. In particular, it is preferable to select a water-soluble resin as the emulsifying aid of which the catalytic poisoning effect on the platinum group metal-based catalyst of the component (F) described later is as little as possible.

The amount of the water-soluble resin is preferably a minimum amount that provides sufficient stability of the silicone emulsion as in the above-described surfactant. For example, the amount is preferably 0.5 to 10 parts by mass based on 100 parts by mass of the sum of the component (G) and the component (H) and more preferably 1 to 5 parts by mass. If the amount of the water-soluble resin is higher than the above upper limit, the addition reaction may be inhibited, and the oil resistance and the water resistance may be decreased. If the amount is less than the lower limit, the stabilizing effect is less likely to be achieved.

### (J) Water

The component (J) is water that is the continuous phase of an emulsion, and various types of water, such as ion-exchanged water and purified water, can be used.

### Other components

In the present invention, each silicone emulsion in the component (B), component (C), and component (D) may include optional components other than the above-described components. Examples of such optional component include, for the purpose of suppressing the catalytic activity of the platinum group metal-based catalyst, a catalytic activity inhibitor (control agent) selected from various organic nitrogen compounds, organophosphorus compounds, acetylene-based compounds, oxime compounds, organochloro compounds, and the like. Examples thereof include acetylene alcohols, such as 3-methyl-1-butyn-3-ol, 3,5-dimethyl-1-hexyn-3-ol, 3-methyl-1-pentyn-3-ol, 2-phenyl-3-butyn-2-ol, 1-ethynyl-1-cyclohexanol; acetylene compounds, such as 3-methyl-3-1-penten-1-yl and 3,5-dimethyl-3-hexen-1-yl; reaction products of these acetylene compounds and alkoxysilane or siloxane or hydrogen silane; vinyl siloxanes such as a tetramethylvinylsiloxane cyclic compound; organic nitrogen compounds such as benzotriazole; and other organophosphorus compounds, oxime compounds, and organochloro compounds. The degree of the curing suppression effect brought by the addition reaction control agent varies depending on its chemical structure. Accordingly, the addition amount of each addition reaction control agent to be used can be appropriately adjusted according to a known method. The oil-resistant agent composition can have more excellent long-term storage stability at room temperature and heat curing properties by containing an appropriate amount of such addition reaction control agent.

### (E) Water

The component (E) is water, and the same water as the above-described component (J) can be used. The content of the component (E) in the aqueous oil-resistant agent composition of the present invention is 1,000 to 50,000 parts by mass based on 100 parts by mass of the component (A) and is preferably 2,000 to 30,000 parts by mass and more preferably 3,000 to 10,000 parts by mass. If the content of the component (E) based on 100 parts by mass of the component (A) is less than 1,000 parts by mass, the handling properties deteriorate, and if the content is greater than 50,000, the coating amount decreases, resulting in insufficient oil resistance.

The content of the component (E) in the aqueous oil-resistant agent composition of the present invention based on 100 parts by mass of the component (A) is in the above-mentioned range, and the content based on 100 parts of the sum of the components (A), (G), and (H) is preferably 400 to 5,000 parts by mass, more preferably 1,000 to 3,000 parts by mass, and particularly preferably 1,500 to 2,000 parts by mass. The content of the component (E) in the aqueous oil-resistant agent composition is preferably within the above range because the handling properties are good and the balance between the oil resistance and the coating amount is also good in such a range.

### (F) Platinum group metal-based catalyst

The platinum group metal-based catalyst as the component (F) is a catalyst for promoting the addition reaction between the component (G) and the component (H), and any catalyst known by those skilled in the art as a catalyst that promotes a so-called hydrosilylation reaction can be used. Examples of such a platinum group metal-based catalyst include platinum-based, palladium-based, rhodium-based, and ruthenium-based catalysts, and among them, a platinum-based catalyst is particularly preferably used. Examples of the platinum-based catalyst include chloroplatinic acid, an alcohol or aldehyde solution of chloroplatinic acid, complexes of chloroplatinic acid with various olefins or vinyl siloxanes, and complexes of platinum with various olefins or vinyl siloxanes.

It is sufficient that the addition amount of the platinum group metal-based catalyst be a catalytic amount. For example, in order to obtain a good cured coating film and also from an economic point of view, it is preferred that the amount as a platinum group metal equivalent amount based on the total mass of the component (G) and component (H) be 1 to 1,000 ppm, more preferably 10 to 500 ppm, and particularly preferably 20 to 200 ppm. If the blending amount of the component (F) is less than the above lower limit, insufficient curing may occur, and if the amount is greater than the upper limit, the cost may be increased.

The aqueous oil-resistant agent composition of the present invention may include the component (F) as a mixture with the surfactant (I) and the water (E).

That is, the aqueous oil-resistant agent composition <1> is an aqueous oil-resistant agent composition including components (A), (B), (E), and (K) of:
(A) a cellulose-based resin having a viscosity of 2 to 10,000 mPa·s in a 2% aqueous solution at 20°C in an amount of 100 parts by mass;
(B) an addition-curing silicone emulsion in an amount of 10 to 10,000 parts by mass;
(E) water in an amount of 1,000 to 50,000 parts by mass; and
(K) a catalyst composition,
wherein the above addition-curing silicone emulsion (B) includes:
   (G) an alkenyl group-containing organopolysiloxane containing at least two alkenyl groups bonded to silicon atoms per molecule and having a viscosity of 5 mPa·s or more at 25°C in an amount of 5% to 40% by mass of the component (B), wherein the alkenyl number of the whole component (G), defined as the number of moles of the alkenyl groups bonded to silicon atoms contained in 100 g of the whole component (G), is greater than 0.1 mol/100 g;
   (H) an organohydrogen polysiloxane containing at least two hydrogen atoms bonded to silicon atoms (SiH groups) per molecule in an amount expressed by % by mass such that the number of moles of the SiH groups in the component (H) is 1 to 5 times the number of moles of the alkenyl groups in the component (G);
   (I) a surfactant in an amount of 0.1% to 10% by mass of the component (B); and
   (J) water in an amount of 10% to 90% by mass of the component (B), and
wherein the catalyst composition (K) includes:
   (F) a platinum group metal-based catalyst;
   (I) a surfactant; and
   (J) water.

The aqueous oil-resistant agent composition <2> is an aqueous oil-resistant agent composition including components (A), (C), (D), (E), and (K) of:
(A) a cellulose-based resin having a viscosity of 2 to 10,000 mPa·s in a 2% aqueous solution at 20°C in an amount of 100 parts by mass;
(C) a silicone emulsion in an amount of 5 to 5,000 parts by mass;
(D) a silicone emulsion;
(E) water in an amount of 1,000 to 50,000 parts by mass; and
(K) a catalyst composition,
wherein the silicone emulsion (C) includes:
   (G) an alkenyl group-containing organopolysiloxane having at least two alkenyl groups bonded to silicon atoms per molecule and having a viscosity of 5 mPa·s or more at 25°C in an amount of 5% to 60% by mass of the component (C), wherein the alkenyl number of the whole component (G), defined as the number of moles of the alkenyl groups bonded to silicon atoms contained in 100 g of the whole component (G), is greater than 0.1 mol/100 g;
   (I) a surfactant in an amount of 0.1% to 10% by mass of the component (C); and
   (J) water in an amount of 10% to 90% by mass of the component (C),
wherein the silicone emulsion (D) includes:
   (H) an organohydrogen polysiloxane containing at least two hydrogen atoms bonded to silicon atoms per molecule in an amount of 5% to 60% by mass of the component (D);
   (I) a surfactant in an amount of 0.1% to 10% by mass of the component (D); and
   (J) water in an amount of 10% to 90% by mass of the component (D), and
the content of the component (D) in the composition is determined such that the number of moles of the SiH groups of the component (H) in the component (D) is 1 to 5 times the number of moles of the alkenyl groups of the component (G) in the component (C), and
wherein the catalyst composition (K) includes:
   (F) a platinum group metal-based catalyst;
   (I) a surfactant; and
   (J) water.

The catalyst composition (K) is particularly preferably an aqueous emulsion mixture of the component (F), component (I), and component (J), that is, an emulsion with water as the continuous phase.

The content proportion of the component (F) in the catalyst composition (K) is preferably 0.1% to 10% by mass, more preferably 0.2% to 5% by mass, and further preferably 0.3% to 3% by mass.

Examples of the surfactant (I) used in the catalyst composition (K) can be the same as those mentioned above. The surfactant (I) used in the catalyst composition (K) preferably includes a nonionic surfactant as in the surfactant used in emulsification of the component (G) and the component (H).

The content proportion of the component (I) in the catalyst composition (K) is preferably 0.1% to 5% by mass, more preferably 0.2% to 3% by mass, and further preferably 0.3% to 2% by mass. If the content proportion of the component (I) in the catalyst composition (K) is greater than 5% by mass, the addition reaction is prevented, and the oil resistance and the water resistance may be decreased. If the content proportion is less than 0.1% by mass, the stability may be deteriorated.

The content proportion of the component (J) in the catalyst composition (K) is preferably 10% to 90% by mass, more preferably 20% to 85% by mass, and further preferably 30% to 80% by mass. If the content proportion of the component (J) in the catalyst composition (K) is less than 10% by mass, the component (F) may be difficult to disperse, and if the content proportion is greater than 90% by mass, the stability over time of the emulsion may decrease.

The catalyst composition (K) may include a component that can be contained in each silicone emulsion of the component (B), component (C), and component (D) in order to form a stable emulsion, in addition to the above components (F), (I), and (J).

The aqueous oil-resistant agent composition of the present invention may include a preservative, an antifoaming agent, a fragrance, a thickener, an antioxidant, a rust inhibitor, a pigment, a filler, an organic powder, an inorganic powder, and the like within a range that does not impair the effects of the present invention. Their amounts are selected from their suitable amounts.

Each component in the aqueous oil-resistant agent composition of the present invention is preferably composed of only compounds that are listed on the positive list prescribed by the Ministry of Health, Labor and Welfare and the Japan Paper Association (Article 18, paragraph 3 of the revised Food Sanitation Act and Notification No. 370, Positive List of Chemical Substances in Paper and Paperboard Products for Food Contact Use) from the viewpoint of safety.

### [Method of producing aqueous oil-resistant agent composition]

The aqueous oil-resistant agent composition <1> of the present invention can be produced by mixing a cellulose-based resin (A), an addition-curing silicone emulsion (B), water (E), and a platinum group metal-based catalyst (F).

The addition order of each component is not particularly limited, but a preferable method of producing the aqueous oil-resistant agent composition <1> is a method comprising the steps of:
(Step 1) mixing and emulsifying the components (G), (H), (I), and (J) to prepare an addition-curing silicone emulsion (B); and
(Step 2) mixing the components (A), (E), and (F) and the addition-curing silicone emulsion (B) prepared in the (Step 1).

A more preferable method of producing the aqueous oil-resistant agent composition <1> is a method comprising the steps of:
(Step 1) mixing and emulsifying the components (G), (H), (I), and (J) to prepare an addition-curing silicone emulsion (B);
(Step 2-1) mixing the components (A) and (E) to prepare an aqueous solution of the component (A);
(Step 2-2) mixing the components (F), (I), and (J) to prepare a catalyst composition (K); and
(Step 2-3) mixing the addition-curing silicone emulsion (B) prepared in the (Step 1), the aqueous solution of the component (A) prepared in the (Step 2-1), and the catalyst composition (K) prepared in the (Step 2-2).

The aqueous oil-resistant agent composition <2> of the present invention can be produced by mixing a cellulose-based resin (A), a silicone emulsion (C), a silicone emulsion (D), water (E), and a platinum group metal-based catalyst (F).

The addition order of each component is not particularly limited, but a preferable method of producing the aqueous oil-resistant agent composition <2> is a method comprising the steps of:
(Step 1') mixing and emulsifying the components (G), (I), and (J) to prepare a silicone emulsion (C);
(Step 1") mixing and emulsifying the components (H), (I), and (J) to prepare a silicone emulsion (D); and
(Step 2') mixing the components (A), (E), and (F), the silicone emulsion (C) prepared in the (Step 1'), and the silicone emulsion (D) prepared in the (Step 1").

A more preferable method of producing the aqueous oil-resistant agent composition <2> is a method comprising the steps of:
(Step 1') mixing and emulsifying the components (G), (I), and (J) to prepare a silicone emulsion (C);
(Step 1") mixing and emulsifying the components (H), (I), and (J) to prepare a silicone emulsion (D);
(Step 2'-1) mixing the components (A) and (E) to prepare an aqueous solution of the component (A);
(Step 2'-2) mixing the components (F), (I), and (J) to prepare a catalyst composition (K); and
(Step 2'-3) mixing the silicone emulsion (C) prepared in the (Step 1'), the silicone emulsion (D) prepared in the (Step 1"), the aqueous solution of the component (A) prepared in the (Step 2'-1), and the catalyst composition (K) prepared in the (Step 2'-2).

### (Step 1) Preparation of addition-curing silicone emulsion (B)

The component (B) can be produced by a known method, for example, a method of mixing predetermined amounts of the component (G), component (H), and component (I) and a part of water (J) using a mixer capable of applying high shear such as a planetary mixer, a combi mixer, or a high-pressure homogenizer, emulsifying the mixture by a phase inversion method, and diluting the emulsion by adding the remainder of the water (J) thereto.

At the time of preparing the addition-curing silicone emulsion (B), the component (A), the component (F), and other components such as the water-soluble resin as an emulsifying aid mentioned above and a catalytic activity inhibitor may be mixed in respective predetermined amounts.

### (Step 1') Preparation of silicone emulsion (C)

The component (C) can be produced by a known method, for example, a method of mixing predetermined amounts of the component (G) and component (I) and a part of water (J) using a mixer capable of applying high shear such as a planetary mixer, a combi mixer, or a high-pressure homogenizer, emulsifying the mixture by a phase inversion method, and diluting the emulsion by adding the remainder of the water (J) thereto.

At the time of preparing the silicone emulsion (C), the component (A), the component (F), and other components such as the water-soluble resin as an emulsifying aid and a catalytic activity inhibitor may be mixed in respective predetermined amounts.

### (Step 1") Preparation of silicone emulsion (D)

The component (D) can be produced by a known method, for example, a method of mixing predetermined amounts of the component (H) and component (I) and a part of water (J) using a mixer capable of applying high shear such as a planetary mixer, a combi mixer, or a high-pressure homogenizer, emulsifying the mixture by a phase inversion method, and diluting the emulsion by adding the remainder of the water (J) thereto.

At the time of preparing the silicone emulsion (D), the component (A), the component (F), and other components such as the water-soluble resin as an emulsifying aid mentioned above and a catalytic activity inhibitor may be mixed in respective predetermined amounts.

### (Step 2) Mixing of components (A), (E), and (F) and component (B)

### (Step 2') Mixing of components (A), (E), and (F), component (C), and component (D)

In the (Step 2) and the (Step 2'), it is sufficient that the components be uniformly mixed, and it is sufficient that the components be mixed using a known mixer. The mixing is preferably performed at 10°C to 30°C from the stability of the emulsion.

### (Step 2-1) and (Step 2'-1) Preparation of aqueous solution of component (A)

The (Step 2-1) and the (Step 2'-1) are steps of dissolving the component (A) in the water (E) to prepare an aqueous solution with a predetermined concentration. It is preferable from the viewpoint of ease of handling to dissolve the cellulose-based resin (A) in the water (E) in advance before mixing with other components, and then mixing the mixture of the component (A) and the component (E) with other components. The concentration of the component (A) in the aqueous solution of the component (A) obtained in this step is preferably 0.5% to 10% by mass.

### (Step 2-2) and (Step 2'-2) Preparation of catalyst composition (K)

The component (F) may be mixed at the time of producing the addition-curing silicone emulsion (B), but it is preferable to mix the component (F), the surfactant (I), and the water (J) before mixing with other components, and then mix other components to obtain a catalyst composition (K).

It is sufficient that the catalyst composition (K) be produced using an apparatus that can mix each component, but in a preferred method, mixing is performed using a mixer capable of applying high shear, such as a planetary mixer, a combi mixer, or a high-pressure homogenizer, and emulsifying the mixture by a phase inversion method to obtain an emulsion.

### (Step 2-3) Mixing component (B), aqueous solution of component (A), and component (K)

### (Step 2'-3) Mixing component (C), component (D), aqueous solution of component (A), and component (K)

The (Step 2-3) is preferably performed immediately before the aqueous oil-resistant agent composition <1> is used (for example, immediately before coating the paper substrate). The (Step 2'-3) is preferably performed immediately before the aqueous oil-resistant agent composition <2> is used (for example, immediately before coating the paper substrate).

Consequently, the dehydrogenation of organohydrogensiloxane is suppressed, which not only results in an excellent shelf life, but also readily achieves a wide range of properties by modifying the combination of emulsions to be mixed.

### [Method for oil-resistant treatment]

The aqueous oil-resistant agent composition of the present invention is suitable for use in imparting oil resistance and water resistance to a paper substrate.

The method of oil-resistant treatment for paper may be an internal addition method in which the aqueous oil-resistant agent composition of the present invention is added to pulp slurry or may be an external addition method in which a paper substrate after papermaking is coated with the aqueous oil-resistant agent composition of the present invention or a paper substrate after papermaking is impregnated with the aqueous oil-resistant agent composition of the present invention, followed by drying.

### [Oil-resistant paper]

The oil-resistant paper of the present invention can be produced by applying the oil-resistant treatment method to a paper substrate, preferably by coating or impregnating a paper substrate with the aqueous oil-resistant agent composition of the present invention.

Examples of the paper substrate include chemical pulp such as hardwood pulp and softwood pulp, mechanical pulp such as groundwood pulp and thermomechanical pulp, and paper obtained from waste paper pulp by papermaking with various paper machines. Specific examples thereof include bleached kraft paper, unbleached kraft paper, fine paper, medium quality paper, lightly coated paper, coated paper, single-sided glazed paper, converting paper, paperboard, white paperboard, liner, semi-glassine paper, glassine paper, and parchment paper. The pulp may contain a pH adjuster, a sizing agent, a paper strengthening agent, a wet paper strength agent, a retention aid, a drainage aid, a dye, an antifoaming agent, a filler, and the like.

The method of coating with the aqueous oil-resistant agent composition is preferably a method of coating a paper substrate by external addition, and examples thereof include coating methods using a bar coater, a knife coater, a size press coater, a roll coater, a reverse roll coater, an air knife coater, a calender, a gate roll coater, a blade coater, a curtain coater, a gravure coater, a rod metering or two-roll size press, or the like.

In order to increase the air permeance of the oil-resistant paper, external addition for infiltrating the inside of the paper substrate with the aqueous oil-resistant agent is preferable compared to coating treatment of only the surface of the paper substrate with the aqueous oil-resistant agent composition, in particular, impregnation treatment using a pond-type size press is preferable.

The amount (solid content after drying) of the aqueous oil-resistant agent composition is not particularly limited, but is preferably 0.1 to 10 g/m², more preferably 0.5 to 3 g/m², and further preferably about 0.5 to 2 g/m². The amount of the aqueous oil-resistant agent composition is preferably within the above range, because the oil resistance and air permeability are excellent in such a range.

The paper substrate after coating treatment is heated to dry the aqueous oil-resistant agent composition. Examples of the heat source include a hot air dryer, an infrared heater, and a rotary dryer. As the drying condition, for example, the temperature is preferably 80°C to 180°C, more preferably 100°C to 150°C, and further preferably 120°C to 150°C. From the viewpoint of productivity and the viewpoint of the addition reaction of the aqueous oil-resistant agent composition, the drying time is preferably 0.1 to 180 minutes, more preferably 1 to 30 minutes, and further preferably 2 to 5 minutes.

The air permeance of the oil-resistant paper of the present invention is determined in terms of the Oken air permeance measured in accordance with JAPAN TAPPI Paper Pulp Test Method No. 5-2:2000. The air permeance of oil-resistant paper depends on the paper substrate, the coating method, and the like and is therefore not particularly limited, but is preferably 1,000 seconds or less, more preferably 500 seconds or less, and further preferably 5 to 300 seconds. The lower limit of the air permeance of the oil-resistant paper is not limited, but can be, for example, 5 seconds. The air permeance of the oil-resistant paper is preferably 1,000 seconds or less, because the flavor and storage stability of food wrapped with the oil-resistant paper do not decrease.

### Examples

The present invention will now be specifically described using Working Examples and Comparative Examples, but is not limited thereto.

The viscosities of the component (A) and the PVA as an emulsifying aid listed below each refers to a value measured at 20°C using a BM-type viscometer. The viscosities of the component (G) listed below each refers to a value measured at 25°C using a B-type rotary viscometer. The vinyl number refers to a value calculated from the iodine number measured and determined by a Hanus method in accordance with JIS K 0070.

Hereinafter, Me and Vi represent a methyl group and a vinyl group, respectively.

### Component (A):

(A-1) methyl cellulose having a viscosity of 25 mPa·s in a 2% aqueous solution at 20°C and having a methoxy group substitution degree of 1.8;
(A-2) methyl cellulose having a viscosity of 4 mPa·s in a 2% aqueous solution at 20°C and having a methoxy group substitution degree of 1.8;
(A-3) methyl cellulose having a viscosity of 100 mPa·s in a 2% aqueous solution at 20°C and having a methoxy group substitution degree of 1.8;
(A-4) methyl cellulose having a viscosity of 8,000 mPa·s in a 2% aqueous solution at 20°C and having a methoxy group substitution degree of 1.8; and
(A-5) hydroxypropylmethyl cellulose having a viscosity of 50 mPa·s in a 2% aqueous solution at 20°C, having a methoxy group substitution degree of 1.8, and having a hydroxypropyl group substitution degree of 0.15.

### Component (F):

(F-1) a platinum(0)-1,3-divinyl-1,1,3,3-tetramethyldisiloxane complex.

### Component (G):

(G-1)

   (ViMe₂SiO_{1/2})₂(Me₂SiO_{2/2})₁₂₀(ViMeSiO_{2/2})₁₈

   vinyl number: 0.187 mol/100 g, viscosity: 300 mPa·s;
(G-2)

   (ViMe₂SiO_{1/2})₂(Me₂SiO_{2/2})₁₀

   vinyl number: 0.211 mol/100 g, viscosity: 9.0 mPa·s;
(G-3)

   (ViMe₂SiO_{1/2})₂(Me₂SiO_{2/2})₉₅(ViMeSiO_{2/2})₃

   vinyl number: 0.070 mol/100 g, viscosity: 300 mPa·s;
(G-4)

   (ViMe₂SiO_{1/2})₂(Me₂SiO_{2/2})₄₃

   vinyl number: 0.063 mol/100 g, viscosity: 60 mPa·s;
(G-5)

   (ViMe₂SiO_{1/2})₂(Me₂SiO_{2/2})ₓ(ViMeSiO_{2/2})_{y}

   vinyl number: 0.13 mol/100 g, raw-rubber-like at 25°C, where a solution in toluene at a concentration of 30% by mass has a viscosity of 7,000 mPa·s, and x + y is a value satisfying the above viscosity, and x/y = 9; and
(G'-1)

   (ViMe₂SiO_{1/2})₂(Me₂SiO_{2/2})₁₆₀(ViMeSiO_{2/2})₂

   vinyl number: 0.03 mol/100 g, viscosity: 400 mPa·s.

### Component (H):

(H-1)

   (Me₃SiO_{1/2})₂(MeHSiO_{2/2})₇₀(Me₂SiO_{2/2})₂₈

   SiH group content: 1.08 mol/100 g, viscosity: 122 mPa·s;
(H-2)

   (Me₃SiO_{1/2})₂(MeHSiO_{2/2})₄₅(Me₂SiO_{2/2})₁₇

   SiH group content: 1.10 mol/100 g, viscosity: 44 mPa·s;
(H-3)

   (Me₃SiO_{1/2})₂(MeHSiO_{2/2})₅₀(Me₂SiO_{2/2})₄₈

   SiH group content: 0.75 mol/100 g, viscosity: 117 mPa·s;
(H-4)

   (Me₃SiO_{1/2})₂(MeHSiO_{2/2})₈₀(Me₂SiO_{2/2})₁₀₀

   SiH group content: 0.65 mol/100 g, viscosity: 370 mPa·s; and
(H-5)

   (Me₃SiO_{1/2})₂(MeHSiO_{2/2})₃₈

   SiH group content: 1.60 mol/100 g, viscosity: 20 mPa·s.

### Component (I):

(I-1) polyoxyethylene styrenated phenyl ether (trade name: Neugen EA-137, manufactured by DKS Co., Ltd.), HLB: 13.0;
(I-2) polyoxyethylene lauryl ether (trade name: Emulgen 109P, manufactured by Kao Corporation, HLB: 13.6); and
(I-3) a mixture solution of ethoxylated 2,4,7,9-tetramethyl-5-decyne-4,7-diol and sodium di-2-ethylhexylsulfosuccinate (trade name: Surfynol PSA-336, manufactured by Evonik Industries AG).

### A. Preparation of emulsion

### Preparation of addition-curing silicone emulsion (B)

### [Preparation Example 1]

93.3 parts by mass of the (G-1), 75.8 parts by mass of the (G-2), 64.2 parts by mass of the (H-1), 2.3 parts by mass of the (I-1) as a surfactant, 77.8 parts by mass of a 15% PVA aqueous solution (manufactured by Mitsubishi Chemical Corporation, trade name: GM-14L, having a viscosity in a 4% aqueous solution at 20°C of 18 mPa·s, saponification degree: 88.5 mol%) as an emulsifying aid, and 1.4 parts by mass of 1-ethynyl-1-cyclohexanol as a catalytic activity inhibitor were charged in a 5-L composite emulsification apparatus (TK Combimix M type, product name of PRIMIX Corporation) including an anchor-shaped mixing blade that can mix the entire container and a rotatable circular plate with small tooth-like protrusions arranged alternately on the top and bottom of its periphery and were stirred and uniformly mixed, and then 70 parts by mass of phase inversion water was added thereto for phase inversion, and stirring was continued for 15 minutes. Subsequently, 198.5 parts by mass of dilution water was added thereto, followed by stirring to obtain an addition-curing emulsion (B-1) with a silicone content of 40%.

### [Preparation Examples 2 to 14]

By the same method as in Preparation Example 1, addition-curing silicone emulsions (B-2 to B-12 and B'-1 and B'-2) were obtained by emulsification of the compositions shown in Tables 1, 2, and 3 below.

### Preparation of silicone emulsion (C) containing organopolysiloxane having alkenyl groups

### [Preparation Example 15]

By the same method as in Preparation Example 1, 93.3 parts by mass of the (G-1), 75.8 parts by mass of the (G-2), 1.7 parts by mass of the (I-1), 56.8 parts by mass of a 15% PVA aqueous solution (manufactured by Mitsubishi Chemical Corporation, trade name: GM-14L, having a viscosity in a 4% aqueous solution at 20°C of 18 mPa·s, saponification degree: 88.5 mol%) as an emulsifying aid, and 1.4 parts by mass of 1-ethynyl-1-cyclohexanol as a catalytic activity inhibitor were charged in a composite emulsification apparatus and were stirred and uniformly mixed, and then 51.1 parts by mass of phase inversion water was added thereto for phase inversion, and stirring was continued for 15 minutes. Subsequently, 144.9 parts by mass of dilution water was added thereto, followed by stirring to obtain a silicone emulsion (C-1) containing organopolysiloxane having alkenyl groups with a silicone content of 40%.

### Preparation of organohydrogen polysiloxane-containing silicone emulsion (D)

### [Preparation Example 16]

By the same method as in Preparation Example 1, 64.2 parts by mass of the (H-1), 0.6 parts by mass of the (I-1), and 21 parts by mass of a 15% PVA aqueous solution (manufactured by Mitsubishi Chemical Corporation, trade name: GM-14L, having a viscosity in a 4% aqueous solution at 20°C of 18 mPa·s, saponification degree: 88.5 mol%) as an emulsifying aid were charged in a composite emulsification apparatus and were stirred and uniformly mixed, and then 18.9 parts by mass of phase inversion water was added thereto for phase inversion, and stirring was continued for 15 minutes. Subsequently, 53.6 parts by mass of dilution water was added thereto, followed by stirring to obtain an organohydrogen polysiloxane-containing silicone emulsion (D-1) with a silicone content of 40%.

### Preparation of catalyst composition (K)

### [Preparation Example 17]

The (F-1) and the (I-2) were mixed with water and emulsified such that the amounts of the (F-1) and (I-2) in the catalyst composition were 0.4% by mass and 0.2% by mass, respectively, to obtain a platinum catalyst emulsion composition (K-1).

### B. Preparation of aqueous oil-resistant agent composition and oil-resistant paper

### [Working Example 1]

2,000 parts by mass of an aqueous solution of a 5% cellulose-based resin (A-1) dissolved in water in advance, 583.3 parts by mass of the addition-curing silicone emulsion (B-1) with a silicone content of 40%, 5,983 parts by mass of the water (E), and 16.7 parts by mass of the platinum catalyst emulsion (K-1) (platinum weight relative to the silicone content: 85 ppm) were added thereinto and thoroughly mixed to obtain an aqueous oil-resistant agent composition. Quantitative filter paper No. 5B (basis weight: 108 g/m², air permeance: 3.6 seconds) of Advantec Co., Ltd. as a paper substrate was impregnated with the prepared aqueous oil-resistant agent composition, the filter paper was squeezed using a wringer and was then heat-dried with a dryer at 150°C for 3 minutes to obtain oil-resistant paper.

### [Working Examples 2 to 19 and Comparative Examples 1 to 4]

Paper substrates were treated with aqueous oil-resistant agent compositions prepared according to the formulations shown in Tables 1 to 3 below by the same method as in Working Example 1 to obtain oil-resistant paper.

### [Working Example 20]

By the same method as in Working Example 1, 2,000 parts by mass of an aqueous solution of 5% cellulose-based resin (A-1), 425.8 parts by mass of the silicone emulsion (C-1) containing organopolysiloxane having alkenyl groups with a silicone content of 40%, 157.5 parts by mass of the organohydrogen polysiloxane-containing silicone emulsion (D-1) with a silicone content of 40%, and 16.7 parts by mass of the platinum catalyst emulsion (K-1) (platinum weight relative to the silicone content: 85 ppm) were added thereinto and thoroughly mixed to obtain an aqueous oil-resistant agent composition. A paper substrate was treated with the prepared aqueous oil-resistant agent composition in a manner as in Working Example 1 to obtain oil-resistant paper.

### [Comparative Example 5]

With reference to Working Example 4 of Patent document 5 (JP-A-2006-257159), the components shown in Table 4 were emulsified and blended in the same manner as in Preparation Example 1 using the (A-3) as the component (A), the (G'-1) as the component (G), the (H-5) as the component (H), the (I-2) as the component (I), and succinic acid as an additive agent to obtain a composition. A paper substrate was treated using the prepared composition in a manner as in Working Example 1 to obtain oil-resistant paper.

### C. Evaluation items and methods thereof

Each obtained oil-resistant paper was evaluated for each physical property in accordance with the methods shown below. The evaluation results are shown in Tables 1 to 4.

### Oil resistance

One drop of rapeseed oil (trade name: Nisshin Canola Oil) of The Nisshin OilliO Group, Ltd. was placed on oil-resistant paper treated with an aqueous oil-resistant agent composition, and the infiltration state of the oil was visually observed for 30 minutes after dropping. The criteria were as follows:
⊚: (No oil staining or bleed-through after 30 minutes);
∘: (Several pinhole-shaped oil stains appear after 30 minutes);
△: (Oil staining and bleed-through occur after more than 5 minutes but within 15 minutes); and
×: (Oil staining and bleed-through occur within 5 minutes).

### Water resistance

One drop of water was placed on oil-resistant paper treated with an aqueous oil-resistant agent composition, and the infiltration state of the water was visually observed for 30 minutes after dropping. The criteria are shown below:
∘: (No water infiltration after 30 minutes);
△: (Water infiltrates after more than 5 minutes but within 15 minutes); and
×: (Water infiltrates within 5 minutes).

### Air permeance

Air permeance was measured in accordance with JAPAN TAPPI Paper and Pulp Test Method No. 5-2:2000. As the tester, an Oken air permeance tester (model: 2040-C) of Kumagai Riki Kogyo Co., Ltd. was used, and the air permeance was calculated as an average of those at three different points.

**[Table 1]**

| | | Working Example 1 | Working Example 2 | Working Example 3 | Working Example 4 | Working Example 5 | Working Example 6 | Working Example 7 | Working Example 8 | Comparative Example 1 | Comparative Example 2 |
|---|---|---|---|---|---|---|---|---|---|---|---|
| (A-1) | | 100 | - | - | - | - | 100 | 100 | 100 | 100 | |
| (A-2) | | - | 100 | - | - | - | - | - | - | - | - |
| (A-3) | | - | - | 100 | - | - | - | - | - | - | - |
| (A-4) | | - | - | - | 100 | - | - | - | - | - | - |
| (A-5) | | - | - | - | - | 100 | - | - | - | - | - |
| (B) | | (B-1) | (B-1) | (B-1) | (B-1) | (B-1) | (B-1) | (B-1) | (B-1) | - | (B-1) |
| | | 583.3 | 583.3 | 583.3 | 4750 | 583.3 | 250 | 125 | 583.3 | - | 125 |
| Composition of Component (B) | (G-1) | 93.3 | 93.3 | 93.3 | 760 | 93.3 | 40 | 20 | 93.3 | - | 20 |
| | (G-2) | 75.8 | 75.8 | 75.8 | 617 | 75.8 | 32.5 | 16.3 | 75.8 | - | 16.3 |
| | (H-1) | 64.2 | 64.2 | 64.2 | 523 | 64.2 | 27.5 | 13.8 | 64.2 | - | 13.8 |
| | (I-1) | 2.3 | 2.3 | 2.3 | 18.7 | 2.3 | 1.0 | 0.5 | 2.3 | - | 0.5 |
| | PVA (Emulsifying aid) | 11.7 | 11.7 | 11.7 | 95.3 | 11.7 | 5.0 | 2.5 | 11.7 | - | 2.5 |
| | (J): Water | 334.6 | 334.6 | 334.6 | 6571 | 334.6 | 143.4 | 71.7 | 334.6 | - | 71.7 |
| (E): Water | | 5983 | 5983 | 5983 | 35150 | 5983 | 3650 | 2775 | 10430 | 1900 | 2775 |
| (K-1) | | 16.7 | 16.7 | 16.7 | 136 | 16.7 | 7.2 | 3.6 | 10 | - | 3.6 |
| Solid content concentration | | 5% | 5% | 5% | 5% | 5% | 5% | 5% | 3% | 5% | 5% |
| Total vinyl number of component (G) (mol/100 g) | | 0.198 | 0.198 | 0.198 | 0.198 | 0.198 | 0.198 | 0.198 | 0.198 | - | 0.198 |
| H/Vi | | 2.0 | 2.0 | 2.0 | 2.0 | 2.0 | 2.0 | 2.0 | 2.0 | - | 2.0 |
| (A):(G) + (H) | | 30:70 | 30:70 | 30:70 | 5:95 | 30:70 | 50:50 | 67:33 | 30:70 | 100:0 | 0:100 |
| Evaluation result | Oil resistance | ⊚ | ○ | ⊚ | ⊚ | ⊚ | ⊚ | ⊚ | ⊚ | △ | × |
| | Water resistance | ○ | O | ○ | ○ | ○ | ○ | ○ | ○ | × | ○ |
| | Air permeance (sec) | 5 | 4 | 28 | 10 | 5 | 10 | 17 | 5 | 133 | 4 |

**[Table 2]**

| | | Working Example 9 | Working Example 10 | Working Example 11 | Working Example 12 | Working Example 13 | Comparative Example 3 | Comparative Example 4 |
|---|---|---|---|---|---|---|---|---|
| (A-1) | | 100 | 100 | 100 | 100 | 100 | 100 | 100 |
| (B) | | (B-2) | (B-3) | (B-4) | (B-5) | (B-6) | (B'-1) | (B'-2) |
| | | 583.3 | 583.3 | 583.3 | 583.3 | 583.3 | 583.3 | 583.3 |
| Composition of Component (B) | (G-1) | 169.1 | - | 78.5 | 93.3 | - | - | - |
| | (G-2) | - | 169.1 | 64.0 | - | 75.8 | - | - |
| | (G-3) | - | - | - | - | 93.3 | 169.1 | 93.3 |
| | (G-4) | - | - | - | 75.8 | - | - | 75.8 |
| | (G-5) | - | - | 26.5 | - | - | - | - |
| | (H-1) | 64.2 | 64.2 | 64.2 | 64.2 | 64.2 | 64.2 | 64.2 |
| | (I-1) | 2.3 | 2.3 | 2.3 | 2.3 | 2.3 | 2.3 | 2.3 |
| | PVA (Emulsifying aid) | 11.7 | 11.7 | 11.7 | 11.7 | 11.7 | 11.7 | 11.7 |
| | (J): Water | 334.6 | 334.6 | 334.6 | 334.6 | 334.6 | 334.6 | 334.6 |
| (E): Water | | 5983 | 5983 | 5983 | 5983 | 5983 | 5983 | 5983 |
| (K-1) | | 16.7 | 16.7 | 16.7 | 16.7 | 16.7 | 16.7 | 16.7 |
| Solid content concentration | | 5% | 5% | 5% | 5% | 5% | 5% | 5% |
| Total vinyl number of component (G) (mol/100 g) | | 0.187 | 0.211 | 0.187 | 0.131 | 0.133 | 0.070 | 0.067 |
| H/Vi | | 2.1 | 1.9 | 2.1 | 3.1 | 3.0 | 5.7 | 6.0 |
| (A):(G) + (H) | | 30:70 | 30:70 | 30:70 | 30:70 | 30:70 | 30:70 | 30:70 |
| Evaluation result | Oil resistance | ⊚ | ⊚ | ⊚ | ○ | ○ | △ | Δ |
| | Water resistance | ○ | ○ | ○ | ○ | ○ | ○ | ○ |
| | Air permeance (sec) | 8 | 9 | 10 | 8 | 9 | 8 | 9 |

**[Table 3]**

| | | Working Example 14 | Working Example 15 | Working Example 16 | Working Example 17 | Working Example 18 | Working Example 19 | Working Example 20 |
|---|---|---|---|---|---|---|---|---|
| (A-1) | | 100 | 100 | 100 | 100 | 100 | 100 | 100 |
| Silicone emulsion | | (B-7) | (B-8) | (B-9) | (B-10) | (B-11) | (B-12) | (C-1) |
| | | | | | | | | 425.8 |
| | | 583.3 | 583.3 | 583.3 | 583.3 | 583.3 | 583.3 | (D-1) |
| | | | | | | | | 157.5 |
| Silicone emulsion composition | (G-1) | 93.3 | 93.3 | 93.3 | 93.3 | 93.3 | 93.3 | 93.3 |
| | (G-2) | 75.8 | 75.8 | 75.8 | 75.8 | 75.8 | 75.8 | 75.8 |
| | (H-1) | - | - | - | - | 64.2 | 64.2 | 64.2 |
| | (H-2) | 64.2 | - | - | - | - | - | - |
| | (H-3) | - | 64.2 | - | - | - | - | - |
| | (H-4) | - | - | 64.2 | - | - | - | - |
| | (H-5) | - | - | - | 64.2 | - | - | - |
| | (I-1) | 2.3 | 2.3 | 2.3 | 2.3 | - | - | 2.3 |
| | (I-2) | - | - | - | - | 2.3 | - | - |
| | (I-3) | - | - | - | - | - | 2.3 | - |
| | PVA (Emulsifying aid) | 11.7 | 11.7 | 11.7 | 11.7 | 11.7 | 11.7 | 11.7 |
| | (J): Water | 334.6 | 334.6 | 334.6 | 334.6 | 334.6 | 334.6 | 334.6 |
| (E): Water | | 5983 | 5983 | 5983 | 5983 | 5983 | 5983 | 5983 |
| (K-1) | | 16.7 | 16.7 | 16.7 | 16.7 | 16.7 | 16.7 | 16.7 |
| Solid content concentration | | 5% | 5% | 5% | 5% | 5% | 5% | 5% |
| Total vinyl number of component (G) (mol/100 g) | | 0.198 | 0.198 | 0.198 | 0.198 | 0.198 | 0.198 | 0.198 |
| H/Vi | | 2.1 | 1.4 | 1.2 | 3.0 | 2.0 | 2.0 | 2.1 |
| (A):(G) + (H) | | 30:70 | 30:70 | 30:70 | 30:70 | 30:70 | 30:70 | 30:70 |
| Evaluation result | Oil resistance | ⊚ | ⊚ | ⊚ | ○ | ⊚ | ⊚ | ⊚ |
| | Water resistance | ○ | ○ | ○ | ○ | ○ | ○ | ○ |
| | Air permeance (sec) | 9 | 9 | 9 | 8 | 7 | 8 | 6 |

**[Table 4]**

| | | Working Example 7 | Comparative Example 5 |
|---|---|---|---|
| (A-1) | | 100 | - |
| (A-3) | | - | 100 |
| (B) | | (B-1) | (B'-3) |
| | | 125 | 500 |
| Composition of Component (B) | (G-1) | 20 | - |
| | (G-2) | 16.3 | - |
| | (G'-1) | - | 50 |
| | (H-1) | 13.8 | - |
| | (H-5) | - | 3.0 |
| | (1-1) | 0.5 | - |
| | (I-2) | - | 0.5 |
| | PVA (Emulsifying aid) | 2.5 | - |
| | (J): Water | 71.7 | 446.5 |
| (E): Water | | 2775 | 2775 |
| (K-1) | | 3.6 | 3.6 |
| Succinic acid | | - | 3.3 |
| Solid content concentration | | 5% | 5% |
| Total vinyl number of component (G) (mol/100 g) | | 0.198 | 0.03 |
| H/Vi | | 2.0 | 3.0 |
| (A):(G) + (H) | | 67:33 | 67:33 |
| Evaluation result | Oil resistance | ⊚ | × |
| | Water resistance | ○ | ○ |

As shown in Tables 1 to 3, paper impregnated only with a cellulose-based resin (Comparative Example 1) or paper impregnated only with a silicone emulsion (Comparative Example 2) was inferior in either the oil resistance or the water resistance. Paper impregnated with a composition in which the total alkenyl number in the component (G) was 0.1 mol/100 g or less (Comparative Examples 3 and 4) was inferior in oil resistance.

In contrast, the oil-resistant paper obtained by impregnation with the aqueous oil-resistant agent composition of the present invention had the respective advantages of a cellulose-based resin and a silicone emulsion, had excellent oil resistance and water resistance, and had an air permeance of 30 seconds or less so as to have adequate air permeability as food-grade oil-resistant paper.

In addition, it was demonstrated that even when the component (G) and the component (H) are contained in the same silicone emulsion (Working Examples 1 to 19) or contained in different silicone emulsions (Working Example 20), there is no significant difference in the performance of the obtained oil-resistant paper.

In the present invention, the alkenyl number of the component (G) is important, and there was a tendency that the oil resistance decreases as the alkenyl number of the whole component (G) blended in the composition decreases.

As shown in the above Table 4, compared to the result of Working Example 7 shown as an example of the composition of the present invention, the composition of Patent document 5 (Comparative Example 5) failed to exhibit oil resistance. In Working Example of Patent document 5, it is assumed that a surface of a paper substrate containing a filler was coated with the composition and was dried to form a cured coating film on the surface of the paper substrate and thereby impart oil resistance, but it was suggested that when oil resistance is achieved by impregnating the inside of a paper substrate with a composition, the alkenyl number (vinyl number) of the whole component (G) in the composition is important.

It was demonstrated that the oil-resistant paper of the present invention satisfies all of high oil resistance, water resistance, and air permeability since a cellulose-based resin having affinity with paper and an organopolysiloxane having water resistance and air permeability are dispersed in each other in the paper and are physically intertwined with each other. In order to promote the physical intertwining between the cellulose-based resin and the organopolysiloxane, the crosslink density of the organopolysiloxane is important, and it is necessary to use an alkenyl group-containing organopolysiloxane having a high alkenyl number.

### Industrial Applicability

Oil-resistant paper treated with the aqueous oil-resistant agent composition of the present invention can achieve all of oil resistance, water resistance, and air permeability. Accordingly, the oil-resistant paper of the present invention is suitable for use as wrapping paper, a packaging container, or a food tray for fast food that contains a lot of oil and water, or for fried, baked, or other cooked food.

## Claims

1. An aqueous oil-resistant agent composition comprising the components (A), (B), (E), and (F) of:
(A) a cellulose-based resin having a viscosity of 2 to 10,000 mPa·s in a 2% aqueous solution at 20°C in an amount of 100 parts by mass;
(B) an addition-curing silicone emulsion in an amount of 10 to 10,000 parts by mass;
(E) water in an amount of 1,000 to 50,000 parts by mass; and
(F) a platinum group metal-based catalyst in a catalytic amount,
wherein the addition-curing silicone emulsion (B) includes:
(G) an alkenyl group-containing organopolysiloxane containing at least two alkenyl groups bonded to silicon atoms per molecule and having a viscosity of 5 mPa·s or more at 25°C in an amount of 5% to 40% by mass of the component (B), wherein the alkenyl number of the whole component (G), defined as the number of moles of the alkenyl groups bonded to silicon atoms contained in 100 g of the whole component (G), is greater than 0.1 mol/100 g;
(H) an organohydrogen polysiloxane containing at least two hydrogen atoms bonded to silicon atoms (SiH groups) per molecule in an amount expressed by % by mass such that the number of moles of the SiH groups in the component (H) is 1 to 5 times the number of moles of the alkenyl groups in the component (G);
(I) a surfactant in an amount of 0.1% to 10% by mass of the component (B); and
(J) water in an amount of 10% to 90% by mass of the component (B).

2. An aqueous oil-resistant agent composition comprising the components (A), (C), (D), (E), and (F) of:
(A) a cellulose-based resin having a viscosity of 2 to 10,000 mPa·s in a 2% aqueous solution at 20°C in an amount of 100 parts by mass;
(C) a silicone emulsion in an amount of 5 to 5,000 parts by mass;
(D) a silicone emulsion;
(E) water in an amount of 1,000 to 50,000 parts by mass; and
(F) a platinum group metal-based catalyst in a catalytic amount,
wherein the silicone emulsion (C) includes:
(G) an alkenyl group-containing organopolysiloxane containing at least two alkenyl groups bonded to silicon atoms per molecule and having a viscosity of 5 mPa·s or more at 25°C in an amount of 5% to 60% by mass of the component (C), wherein the alkenyl number of the whole component (G), defined as the number of moles of the alkenyl groups bonded to silicon atoms contained in 100 g of the whole component (G), is greater than 0.1 mol/100 g;
(I) a surfactant in an amount of 0.1% to 10% by mass of the component (C); and
(J) water in an amount of 10% to 90% by mass of the component (C), and
wherein the silicone emulsion (D) includes:
(H) an organohydrogen polysiloxane containing at least two hydrogen atoms bonded to silicon atoms per molecule in an amount of 5% to 60% by mass of the component (D);
(I) a surfactant in an amount of 0.1% to 10% by mass of the component (D); and
(J) water in an amount of 10% to 90% by mass of the component (D),
wherein the content of the component (D) in the composition is determined such that the number of moles of the SiH groups of the component (H) in the component (D) is 1 to 5 times the number of moles of the alkenyl groups of the component (G) in the component (C).

3. The aqueous oil-resistant agent composition according to claim 1 or 2, wherein the cellulose-based resin as the component (A) is a cellulose ether in which 0.5 to 2.5 hydroxy groups per glucose ring unit of cellulose are substituted with alkoxy groups.

4. The aqueous oil-resistant agent composition according to claim 1 or 2, wherein the component (G) includes at least two types of organopolysiloxanes containing a linear organopolysiloxane containing alkenyl groups only at both ends thereof and a linear organopolysiloxane containing alkenyl groups in a side chain and at both ends thereof.

5. The aqueous oil-resistant agent composition according to claim 1 or 2, wherein the component (G) is a linear alkenyl group-containing organopolysiloxane represented by the following average composition formula (1-1): 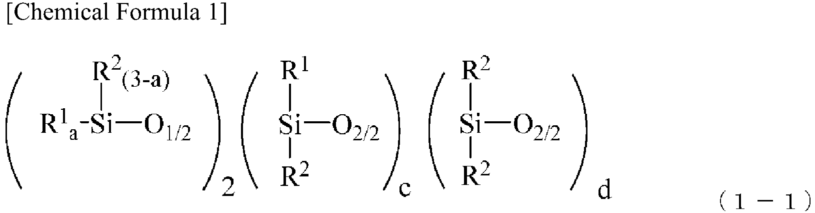 wherein, in the formula (1-1), each R¹ independently represents an alkenyl group-containing organic group having 2 to 10 carbon atoms; each R² independently represents one group selected from a hydroxy group, an alkoxy group, and an unsubstituted or substituted monovalent hydrocarbon group free of alkenyl groups; and a, c, and d are each a number equal to or greater than 0 and satisfy 0 ≤ a ≤ 3, 2 ≤ 2a + c, and 5 ≤ c + d.

6. The aqueous oil-resistant agent composition according to claim 1 or 2, wherein in the component (H), the proportion of the total number of hydrogen atoms bonded to silicon atoms to the total number of hydrogen atoms bonded to silicon atoms and groups bonded to silicon atoms is 15% to 50%.

7. The aqueous oil-resistant agent composition according to claim 1, wherein the silicone emulsion as the component (B) further includes a polyvinyl alcohol (PVA)-based resin in an amount of 0.5% to 10% by mass of the component (B).

8. The aqueous oil-resistant agent composition according to claim 2, wherein at least one of the silicone emulsion of the component (C) and the silicone emulsion of the component (D) further includes a polyvinyl alcohol (PVA)-based resin in an amount of 0.5% to 10% by mass of the component (C) or the component (D).

9. The aqueous oil-resistant agent composition according to claim 1 or 2, wherein the total mass of the component (G) and the component (H) is 60 to 2,000 parts by mass based on 100 parts by mass of the component (A).

10. A method of producing the aqueous oil-resistant agent composition according to claim 1, the method comprising:
(Step 1) mixing and emulsifying the components (G), (H), (I), and (J) of:
(G) an alkenyl group-containing organopolysiloxane containing at least two alkenyl groups bonded to silicon atoms per molecule and having a viscosity of 5 mPa·s or more at 25°C in an amount of 5% to 40% by mass of the component (B), wherein the alkenyl number of the whole component (G), defined as the number of moles of the alkenyl groups bonded to silicon atoms contained in 100 g of the whole component (G), is greater than 0.1 mol/100 g,
(H) an organohydrogen polysiloxane containing at least two hydrogen atoms bonded to silicon atoms (SiH groups) per molecule in an amount expressed by % by mass such that the number of moles of the SiH groups in the component (H) is 1 to 5 times the number of moles of the alkenyl groups in the component (G),
(I) a surfactant in an amount of 0.1% to 10% by mass of the component (B), and
(J) water in an amount of 10% to 90% by mass of the component (B) to prepare an addition-curing silicone emulsion (B); and
(Step 2) mixing the components (A), (E), and (F) of:
(A) a cellulose-based resin having a viscosity of 2 to 10,000 mPa·s in a 2% aqueous solution at 20°C in an amount of 100 parts by mass,
(E) water in an amount of 1,000 to 50,000 parts by mass, and
(F) a platinum group metal-based catalyst in a catalytic amount
with 10 to 10,000 parts by mass of the addition-curing silicone emulsion (B) prepared in the (Step 1).

11. A method of producing the aqueous oil-resistant agent composition according to claim 2, the method comprising:
(Step 1') mixing and emulsifying the components (G), (I), and (J) of:
(G) an alkenyl group-containing organopolysiloxane containing at least two alkenyl groups bonded to silicon atoms per molecule and having a viscosity of 5 mPa·s or more at 25°C in an amount of 5% to 60% by mass of the component (C), wherein the alkenyl number of the whole component (G), defined as the number of moles of the alkenyl groups bonded to silicon atoms contained in 100 g of the whole component (G), is greater than 0.1 mol/100 g,
(I) a surfactant in an amount of 0.1% to 10% by mass of the component (C), and
(J) water in an amount of 10% to 90% by mass of the component (C) to prepare a silicone emulsion (C);
(Step 1") mixing and emulsifying the components (H), (I), and (J) of:
(H) an organohydrogen polysiloxane containing at least two hydrogen atoms bonded to silicon atoms per molecule in an amount of 5% to 60% by mass of the component (D),
(I) a surfactant in an amount of 0.1% to 10% by mass of the component (D), and
(J) water in an amount of 10% to 90% by mass of the component (D) to prepare a silicone emulsion (D); and
(Step 2') mixing
5 to 5,000 parts by mass of the silicone emulsion (C) prepared in the (Step 1'),
the silicone emulsion (D) prepared in the (Step 1") in an amount such that the number of moles of the SiH groups of the component (H) in the component (D) is 1 to 5 times the number of moles of the alkenyl groups of the component (G) in the component (C), and
the components (A), (E), and (F) defined as:
(A) a cellulose-based resin, having a viscosity of 2 to 10,000 mPa·s in a 2% aqueous solution at 20°C, in an amount of 100 parts by mass;
(E) water in an amount of 1,000 to 50,000 parts by mass; and
(F) a platinum group metal-based catalyst in a catalytic amount.

12. A method for oil-resistant treatment for paper, comprising internally adding the aqueous oil-resistant agent composition, according to claim 1 or 2, to pulp slurry or externally adding the aqueous oil-resistant agent composition, according to claim 1 or 2, to a paper substrate.

13. An oil-resistant paper treated with the aqueous oil-resistant agent composition according to claim 1 or 2, wherein the oil-resistant paper exhibits an air permeance of 1,000 seconds or less when the air permeance is measured as an Oken air permeance in accordance with JAPAN TAPPI Paper and Pulp Test Method No. 5-2:2000.
